# EUROPEAN PATENT APPLICATION

(11) **EP 4 129 813 A1**
(43) Date of publication of application: **08.02.2023**
(21) Application number: 21775379.7
(22) Date of filing: 17.02.2021
(51) Int. Cl.: B62M 6/45, B62M 6/55

(54) **ELECTRIC ASSIST DEVICE AND BICYCLE**

(30) Priority: 26.03.2020 JP 2020056873
(71) Applicant: HONDA MOTOR CO., LTD., Minato-ku Tokyo 107-8556 (JP)
(72) Inventor: TSUKAMOTO, Kenji, Wako-shi, Saitama 351-0193 (JP)
(74) Representative: Weickmann & Weickmann PartmbB
(86) International application number: PCT/JP2021/005847
(87) International publication number: WO 2021/192742

(57) **Abstract**

The present invention allows failures to be individually detected among a plurality of sensors used for estimating the pedal force, and reduces the possibility of losing the assist function due to a sensor failure. An electric power assist device (50) includes a first to a third pedal force estimating computation unit (152, 154, 156) that estimate the pedal force of the bicycle according to variances between values of a first to a third state quantity detected by the first to third pedal force estimating computation units at two mutually different crank angle positions, a motor drive control unit (164) configured to control a drive of an electric motor according to a selected one of the pedal forces estimated by the first, the second and the third state quantity detecting units, and a failure diagnosis unit (158) configured to diagnose failures of the first, the second and the third state quantity detecting units by evaluating the variances in the values of first, the second and the third state quantities.

## Description

### TECHNICAL FIELD

The present invention relates to an electric power assist device and a bicycle, and particularly to a control arrangement for an electric motor that provides an assist force.

### BACKGROUND ART

In regard to electrically assisted bicycles, it is known to measure the strain in the pedal system by using a strain gauge, and control the operation of the electric motor according to the pedal force computed from the measured strain in the pedal system (see Patent Document 1, for example), and it is also known to control the operation of the electric motor according to the pedal force which is detected by a pedal force sensor including a pedal force transmission sleeve attached to a crankshaft configured to be driven by the pedal (see Patent Document 2, for example).

### PRIOR ART DOCUMENT(S)

### PATENT DOCUMENT(S)

Patent Document 1: JP2007-91159A
Patent Document 2: US6196347B1

In these conventional electrically power assisted bicycle, a strain gauge or a pedal force sensor is required to be attached to the pedal, the crankshaft, or the like in order to detect the pedal force with the result that the structure tends to be complex. In particular, if the pedal force is to be detected by using a strain gauge or a pedal force sensor in an existing bicycle, a substantial modification of the bicycle is required.

The applicant of the present application has previously proposed a technology whereby the pedal force is estimated from the fore and aft acceleration of the bicycle detected by an acceleration sensor, from the angular velocity of a rotating member equivalent to the crankshaft detected by a rotational angle sensor, and from the current of the electric motor detected by a current sensor, and the assist force by the electric motor is controlled according to the estimated pedal force without using a strain gauge or a pedal force sensor.

In estimating the pedal force in this manner, if the acceleration sensor, rotational angle sensor, or current sensor should fail, the estimation of the pedal force cannot be performed correctly so that the assist operation is required to be disabled. In the electrically assisted bicycle, once the assist operation is disabled, the rider is required to rotationally drive the electric motor by pedaling so that a substantial pedaling effort will be required. For this reason, when a failure occurs in an electrically power assisted bicycle, the physical burden on the rider significantly increases.

In view of such a problem of the prior art, a primary object of the present invention is to individually detect a failure among a plurality of sensors used for estimating the pedal force, and reduce the possibility of losing the assist function due to a sensor failure.

### MEANS TO ACCOMPLISH THE TASK

To achieve such an object, a certain aspect of the present invention provides an electric power assist device (50) configured to be fitted to a bicycle (10), comprising; an electric motor (58) connected to a crankshaft (24) configured to be driven by a pedal force applied to a pedal of the bicycle via a crank arm (26) or to the crank arm in a torque transmission relationship; a first, a second and a third state quantity detecting unit (130, 134, 136) configured to individually detect a first, a second and a third state quantity which are mutually distinct for estimating the pedal force of the bicycle; and a control unit (150) configured to control an operation of the electric motor based on outputs of the first, the second and the third state quantity detecting units, wherein the control unit includes: a first pedal force estimating computation unit (152) configured to estimate the pedal force of the bicycle according to a variance between values of the first state quantity at two mutually different crank angle positions; a second pedal force estimating computation unit (154) configured to estimate the pedal force of the bicycle according to a variance between values of the second state quantity at two mutually different crank angle positions; a third pedal force estimating computation unit (156) configured to estimate the pedal force of the bicycle according to a variance between values of the third state quantity at two mutually different crank angle positions; a motor drive control unit (164) configured to control a drive of the electric motor according to a selected one of the pedal forces estimated by the first, the second and the third state quantity detecting units; and a failure diagnosis unit (158) configured to diagnose failures of the first, the second and the third state quantity detecting units by evaluating the variances in the values of first, the second and the third state quantities.

Thereby, failures of a plurality of sensors used for estimating the pedal force can be detected individually.

In this electric power assist device, preferably, the motor drive control unit is configured to control the drive of the electric motor according to the pedal force estimated by one of the first pedal force estimating computation unit, the second pedal force estimating computation unit, and the third pedal force estimating computation unit corresponding to one of the first to the third state quantity detecting units that is diagnosed to be not faulty by the failure diagnosis unit.

Thereby, the possibility of stopping the power assist operation due to the failure of the first to third state quantity detecting units can be minimized.

In this electric power assist device, preferably, one of the two mutually different crank angle positions includes a top dead center of the pedal, and another of the two mutually different crank angle positions includes a crank angle position 90 degrees sway from the top dead center of the pedal.

Thereby, the variances between the values of the first to third state quantities at the two different crank angle positions can be made highly distinct so that failure detection and pedal force estimation can be performed with high accuracy.

In this electric power assist device, preferably, the first pedal force estimation calculation unit is configured to estimate the pedal force according to a variance between average values of the first state quantity averaged over two rotational angle ranges containing the two mutually different crank angle positions, respectively, the second pedal force estimation calculation unit is configured to estimate the pedal force according to a variance between average values of the second state quantity averaged over two rotational angle ranges containing the two mutually different crank angle positions, respectively, and the third pedal force estimation calculation unit is configured to estimate the pedal force according to a variance between average values of the third state quantity averaged over two rotational angle ranges containing the two mutually different crank angle positions, respectively.

Thereby, the accuracy of failure detection and pedal force estimation can be improved.

In this electric power assist device, preferably, the first to third state quantity detecting units are selected from an acceleration sensor (134) for detecting a fore and aft acceleration of the bicycle, a rotational angle sensor (130) for detecting a crank angle and a crank angular velocity of the crankshaft, and a current sensor (136) for detecting a motor current value of the electric motor.

Thereby, failures of the acceleration sensor, the rotational angle sensor, and the current sensor can be individually determined.

In this electric power assist device, preferably, the failure diagnosis unit is configured to determine the failures of the first to third state quantity detecting units by comparing the variances between the values of the first to third state quantities with corresponding first to third threshold values, respectively.

Thereby, the failures of the first to third state quantity detecting units can be individually determined.

In this electric power assist device, preferably, the failure diagnosis unit is configured to diagnose the first state quantity detecting unit to be normal when the variance in regard to the first state quantity is in a prescribed magnitude relationship to the first threshold value, and the first state quantity detecting unit to be faulty when the variance in regard to the first state quantity is not in the prescribed magnitude relationship to the first threshold value; the failure diagnosis unit is configured to diagnose the second state quantity detecting unit to be normal when the variance in regard to the second state quantity is in a prescribed magnitude relationship to the second threshold value, and the second state quantity detecting unit to be faulty when the variance in regard to the second state quantity is not in the prescribed magnitude relationship to the second threshold value; and the failure diagnosis unit is configured to diagnose the third state quantity detecting unit to be normal when the variance in regard to the third state quantity is in a prescribed magnitude relationship to the third threshold value, and the third state quantity detecting unit to be faulty when the variance in regard to the third state quantity is not in the prescribed magnitude relationship to the third threshold value.

Thereby, the failure determination of the first to third state quantity detecting units can be performed in a sequential manner so that failure detection of the first to third state quantity detecting units can be prioritized.

In this electric power assist device, preferably, the motor drive control unit is configured to control the drive of the electric motor according to the pedal force estimated by the first pedal force estimating computation unit when the first pedal force estimating computation unit is determined to be normal by the failure diagnosis unit; to control the drive of the electric motor according to the pedal force estimated by the second pedal force estimating computation unit instead of the first pedal force estimating computation unit when the first pedal force estimating computation unit is determined to be faulty by the failure diagnosis unit; to control the drive of the electric motor according to the pedal force estimated by the third pedal force estimating computation unit instead of the second pedal force estimating computation unit when the second pedal force estimating computation unit is determined to be faulty by the failure diagnosis unit; and to terminate the drive of the electric motor when the third pedal force estimating computation unit is determined to be faulty by the failure diagnosis unit.

Thereby, the possibility of stopping the assist operation due to the failures of the first to third state quantity detecting units can be reduced.

In this electric power assist device, preferably, the failure diagnosis unit is configured to determine the failures of the first to third state quantity detecting units by comparing the variances in regards to the first to third state quantities with one another.

Thereby, the accuracy of failure detection of the first to third state quantity detecting units can be improved.

In this electric power assist device, preferably, the first state quantity detecting unit includes an acceleration sensor for measuring a fore and aft acceleration of the bicycle, the second state quantity detecting unit includes a rotational angle sensor for detecting a crank angle and a crank angular velocity of the crankshaft, and the third state quantity detecting unit includes a current sensor for detecting a motor current value of the electric motor.

Thereby, failures of the acceleration sensor, the rotational angle sensor, and the current sensor can be individually determined.

In this electric power assist device, preferably, the failure diagnosis unit is configured to diagnose all of the acceleration sensor, the rotational angle sensor, and the current sensor to be normal in case where the variance in the vehicle body acceleration between the two mutually different crankshaft angles is equal to or greater than a fourth threshold value when the variance in the crankshaft angular velocity between the two mutually different crankshaft angles is equal to or greater than a fifth threshold value, if the variance in the crank angular velocity between the two mutually different crankshaft angles is equal to or greater than a fifth threshold value when the variance in the motor current between the two mutually different crankshaft angles is equal to or greater than a sixth threshold value; to diagnose that the acceleration sensor to be faulty in case where the variance in the vehicle body acceleration between the two mutually different crankshaft angles is smaller than the fourth threshold value when the variance in the crankshaft angular velocity between the two mutually different crankshaft angles is equal to or greater than the fifth threshold value if the variance in the vehicle body acceleration between the two mutually different crankshaft angles is equal to or greater than the fourth threshold value when the variance in the motor current between the two mutually different crankshaft angles is smaller than the sixth threshold value; to diagnose that the rotational angle sensor to be faulty in case where the variance in the vehicle body acceleration between the two mutually different crankshaft angles is smaller than the fourth threshold value when the variance in the crankshaft angular velocity between the two mutually different crankshaft angles is equal to or greater than the fifth threshold value if the variance in the vehicle body acceleration between the two mutually different crankshaft angles is smaller than the fourth threshold value when the variance in the motor current between the two mutually different crankshaft angles is equal to or greater than the sixth threshold value; and to diagnose that the motor current sensor to be faulty in case where the variance in the vehicle body acceleration between the two mutually different crankshaft angles is equal to or greater than the fourth threshold value when the variance in the crankshaft angular velocity between the two mutually different crankshaft angles is equal to or greater than the fifth threshold value if the variance in the crankshaft angular velocity between the two mutually different crankshaft angles is smaller than the fifth threshold value when the variance in the motor current between the two mutually different crankshaft angles is equal to or greater than the sixth threshold value.

Thereby, failures of the acceleration sensor, the rotational angle sensor, and the current sensor can be individually and accurately determined.

In this electric power assist device, preferably, the failure diagnosis unit diagnoses that the current sensor is also faulty in case where the acceleration sensor is diagnosed to be faulty, and the variance in the crank angular velocity is equal to or greater than the fifth threshold value when the variance in the motor current value is equal to or greater than the sixth threshold value if the variance in the motor current value is smaller than the sixth threshold value when the variance in the crank angular velocity is equal to or greater than the fifth threshold value; that the rotational angle sensor is also faulty if the acceleration sensor is diagnosed to be faulty, and the variance in the crank angular velocity is smaller than the fifth threshold value when the variance in the motor current value is equal to or greater than the sixth threshold value; that the current sensor is also faulty in case where the rotational angle sensor is diagnosed to be faulty, and the variance in the vehicle body acceleration is equal to or greater than the fourth threshold value when the variance in the motor current values is equal to or greater than the sixth threshold value if the variance of the motor current value is smaller than the sixth threshold value when the variance in the vehicle body acceleration is equal to or greater than the fourth threshold value; that the acceleration sensor is faulty if the rotational angle sensor is diagnosed to be faulty, and the variance in the vehicle body acceleration is smaller than the fourth threshold value when the variance in the motor current value is equal to or greater than the sixth threshold value; that the rotational angle sensor is also faulty in case where the current sensor is diagnosed to be faulty, and the vehicle body acceleration is equal to or greater than the fourth threshold value when the variance in the crank angular velocity is equal to or greater than the fifth threshold value if the crank angular velocity is smaller than the fifth threshold value when the variance in the vehicle body acceleration is equal to or greater than the fourth threshold value; and that the acceleration sensor is also faulty if the current sensor is diagnosed to be faulty, and the vehicle body acceleration is smaller than the fourth threshold value when the crank angular velocity is equal to or greater than the fifth threshold value.

Thereby, failures of the acceleration sensor, the rotational angle sensor, and the current sensor can be individually and accurately determined.

A bicycle according to one embodiment of the present invention is fitted with the electric power assist device according to the above-described embodiments.

### EFFECT OF THE INVENTION

The present invention thus provides an electric power assist device that individually detects a failure among a plurality of sensors used for estimating the pedal force, and reduces the possibility of losing the assist function due to a sensor failure.

### BRIEF DESCRIPTION OF THE DRAWINGS

Figure 1 is a fragmentary side view of a bicycle fitted with an electric power assist device according to an embodiment of the present invention;
Figure 2 is a fragmentary perspective view of the bicycle of the present embodiment;
Figure 3 is an exploded perspective of the electric power assist device of the present embodiment;
Figure 4 is a block diagram of the control system of the electric power assist device of the present embodiment;
Figure 5 is a diagram illustrating the relationship between the pedal position and the crank angular position in the electric power assist device of the present embodiment;
Figure 6 is a graph showing the relationship between the fore and aft acceleration and the crank angular position of the bicycle;
Figure 7 is a graph showing the relationship between the crank angular velocity and the crank angular position of the bicycle;
Figure 8 is a graph showing the relationship between the motor current and the crank angular position of the bicycle;
Figure 9 is a flowchart of an assist control in the electric power assist device of the present embodiment;
Figure 10 is a flowchart of an assist control in the electric power assist device according to another embodiment of the present invention;
Figure 11 is a flowchart of a normal control process;
Figure 12 is a flowchart of a process at the time of a current sensor failure;
Figure 13 is a flowchart of a process at the time of a rotational angle sensor failure; and
Figure 14 is a flowchart of a process at the time of an acceleration sensor failure.

### DETAILED DESCRIPTION OF THE PREFERRED EMBODIMENT(S)

A bicycle fitted with an electric power assist device according to an embodiment of the present invention will be described in the following with reference to the appended drawings.

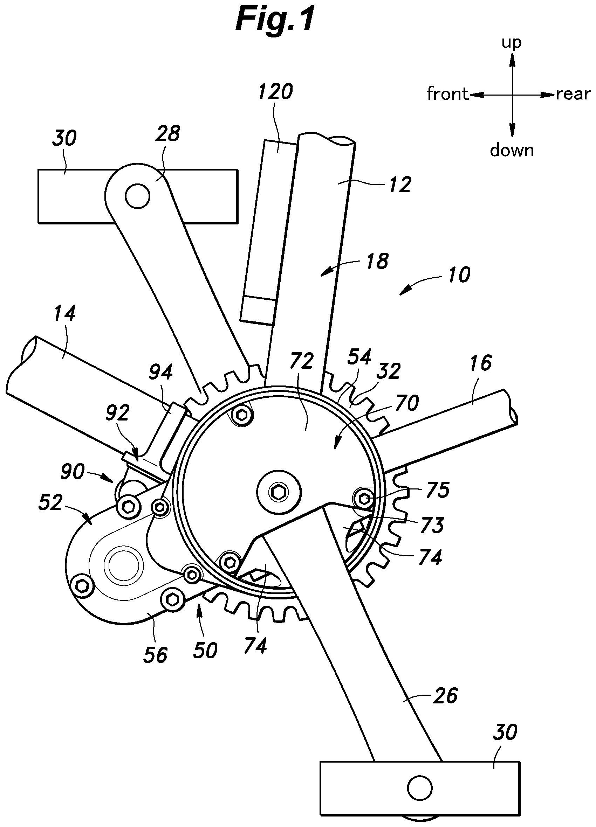

As shown in FIGS. 1 to 3, the bicycle 10 is provided with a frame structure 18 including a seat tube 12 extending substantially vertically and having a saddle (not shown in the drawings) attached to the upper end thereof, a down tube 14 extending substantially in the fore and aft direction, and a pair of chain stays 16 located on either side. The lower end of the seat tube 12, the rear end of the down tube 14, and the front ends of the chain stays 16 are commonly connected to one another by a bearing tube 20 for supporting a crankshaft also serving as a pipe joint.

The bearing tube 20 rotatably supports the crankshaft 24 extending substantially horizontally in the lateral direction. The left and right shaft ends of the crankshaft 24 project outward from the bearing tube 20, and the base ends of the left and right crank arms 26 and 28 are fixed to the respective shaft ends with a rotational phase difference of 180 degrees. The crankshaft 24 forms the rotational center of the crank arms 26 and 28, and the rotational center line of the crankshaft 24 and the rotational center line of the crank arms 26 and 28 are on the same axial line.

Each shaft end of the crankshaft 24 is provided with a spline shaft portion 24A on the outer peripheral surface thereof. The base end of each crank arm 26 is formed with a spline hole 26A. The spline shaft portion 24A and the spline hole 26A are engaged with each other so that the crankshaft 24 and the crank arm 26 are connected in a torque transmitting relationship.

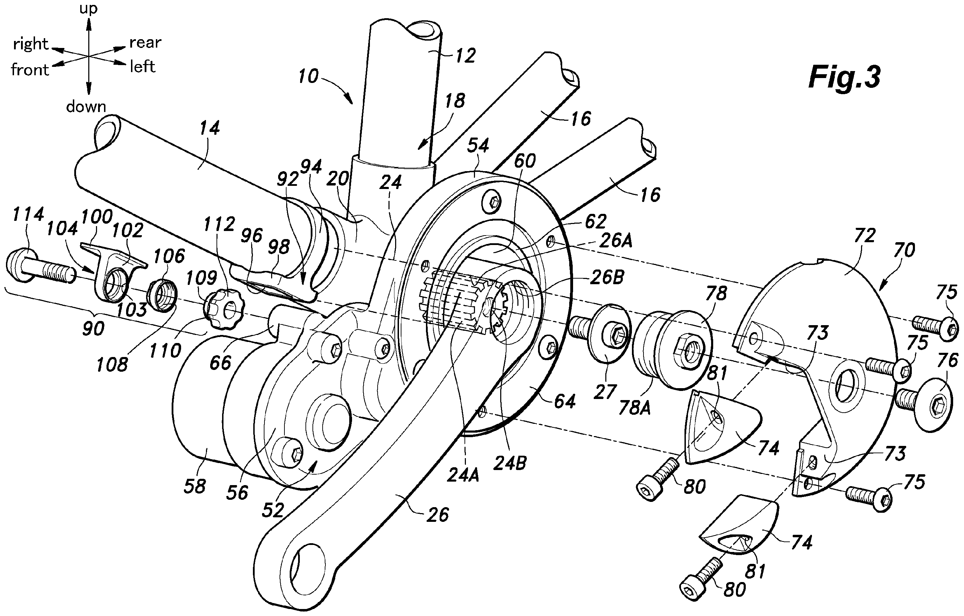

The end surface of the crankshaft 24 is formed with a screw hole 24B (see FIG. 3) opening at the shaft end surface. The base end of the crank arm 26 is formed with a screw hole 26B having an inner diameter larger than that of the spline hole 26A and communicating coaxially with the spline hole 26A. A crank arm mounting screw 27 is threaded into the screw hole 24B, and is provided with a flange portion abutting on the annular shoulder surface defined between the spline hole 26A. As a result, the crank arm 26 is prevented from coming off from the crankshaft 24.

The connection between the crankshaft 24 and the other crank arm 28 is performed in the same manner as the connection between the crankshaft 24 and the crank arm 26 described above.

A pedal 30 is attached to the free end of each crank arm 26, 28. A drive sprocket (chain wheel) 32 is positioned between the crank arm 28 on the right side and the bearing tube 20. The drive sprocket 32 is coaxially connected (fixed) to the crankshaft 24.

The crankshaft 24 is rotationally driven by the left and right crank arms 26 and 28. The rotation of the crankshaft 24 is transmitted to the drive sprocket 32, and is transmitted from the drive sprocket 32 to the rear wheel (not shown in the drawings) by a chain type transmission mechanism (not shown in the drawings). Thereby, the bicycle 10 travels forward.

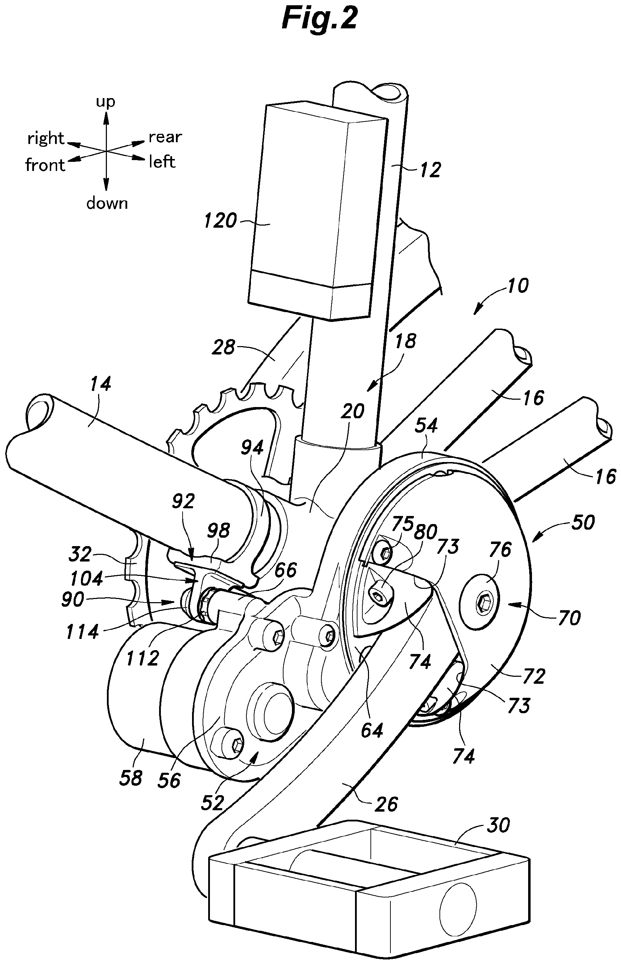

The bicycle 10 has a modular electric power assist device 50 that can be retrofitted. In the following description, the vertical, fore and aft and lateral directions are defined with respect to the state where the electric power assist device 50 is attached to the frame structure 18 of the bicycle 10 as shown in FIGS. 1 and 2.

The electric power assist device 50 is provided with a housing 52 having a hollow structure. The housing 52 includes a ring portion 54 and a tongue shaped extension portion 56 extending radially outward from the ring portion 54. An electric motor 58 is attached to the right side of the extension portion 56. One end of the electric motor 58 is fixed to the extension portion 56 so that the rotational center line of the output shaft (not shown in the drawings) thereof extends in the lateral direction.

As shown in FIG. 3, the ring portion 54 includes a cylindrical portion 62 that defines a central opening 60 that is open in the lateral direction. The cylindrical portion 62 rotatably supports an annular rotary output member 64 on the outer peripheral part thereof. The cylindrical portion 62 is positioned in the space defined between the frame structure 18 and the crank arm 26, along with the rotary output member 64, with the crankshaft 24 loosely passed through the central opening 60 in the lateral direction. The rotary output member 64 is connected to the electric motor 58 in a torque transmitting relationship via a gear train (not shown in the drawings) provided in the housing 52, and is rotationally driven by the electric motor 58 coaxially with respect to the crankshaft 24.

The cylindrical portion 62 and the rotary output member 64 can be installed in the space defined between the frame structure 18 and the crank arm 26 as will be described in the following.

First of all, the left pedal 30 located on the side where the drive sprocket 32 is not located is removed by using an ordinary tool such as a spanner. Then, with the electric power assist device 50 laid flat on one side (such that the electric motor 58 faces upward), the free end of the left crank arm 26 is passed into the central opening 60, and with the crank arm 26 passed into the central opening 60, the electric power assist device 50 is moved to the base end side (rotational center side) of the crank arm 26 along the length of the crank arm 26.

As a result, the cylindrical portion 62 and the rotary output member 64 are moved along the crank arm 26 until the base end part of the crank arm 26 is reached. The inner diameter of the central opening 60 is selected so that this operation is possible. If the central opening 60 has an inner diameter large enough to allow the pedal 30 to be passed therethrough as well, the pedal 30 is not required to be removed for this operation.

Next, the attitude of the electric power assist device 50 is changed such that the electric motor 58 faces sideways or is at its proper orientation (the attitude shown in FIG. 1), and the crankshaft 24 is loosely passed through the central opening 60 in the axial direction. As a result, the cylindrical portion 62 and the rotary output member 64 are positioned between the frame structure 18 and the crank arm 26 with the crankshaft 24 passed laterally and loosely through the central opening 60 simply by removing the pedal 30 or without requiring to remove the pedal 30.

The rotary output member 64 is connected to the crankshaft 24 and the crank arm 26 by a coupling mechanism 70 which includes a substantially disk-shaped coupling main member 72 and a pair of clamp members 74.

The screw hole 26B of the crank arm 26 threadably receives a male thread portion of a screw member 78 serving as a mount portion for mounting the coupling main member 72 to the crank arm 26. The coupling main member 72 is substantially circular dish shaped, and fixed to the rotary output member 64 at the peripheral part thereof by a plurality of bolts 75 and to the screw member 78 at the central part thereof by a bolt 76. As a result, the rotary output member 64 is coaxially positioned on the crankshaft 24 via the coupling main member 72 and the crank arm 26.

A pair of clamp members 74, each having a wedge shape, are positioned on either side of a base end part of the crank arm 26 with respect to the rotational direction so as to slidably engage inclined edge parts 73 of the coupling main member 72, respectively. The clamp members 74 are caused to move toward each other as the clamp members 74 are fastened to the coupling main member 72 by bolts 80, respectively, so that the clamp members 74 clamp the crank arm 26 from both sides, and the coupling main member 72 and the crank arm 26 are connected to each other in a torque transmitting relationship.

As a result, the rotary output member 64 is coaxially coupled to the crankshaft 24 via the coupling main member 72 and the crank arm 26 in a torque transmitting relationship, and rotates integrally with the crankshaft 24 together with the coupling main member 72. The rotary output member 64 and the coupling main member 72 are collectively referred to as a rotary member.

The through holes 81 (see FIG. 2) provided in the clamp members 74 for the bolts 80 are each formed in an oval shape (track shape) so that the two clamp members 74 may move toward each other when the bolts 80 are tightened with respect to the coupling main member 72.

The extension portion 56 of the housing 52 is positioned below the down tube 14 with the electric motor 58 supported thereby, and is supported by the frame structure 18 by being suspended from the down tube 14 by a support mechanism 90.

The support mechanism 90 includes a mounting member 92 which is fixed to the down tube 14 by a fastening band 94. The mounting member 92 includes a support base member 98 provided with a rectangular frame portion 96 in a lower part thereof, and a support member 104 including a rectangular plate portion 100 fixed to the support base member 98 by being fitted into the rectangular frame portion 96, and a depending piece 102 depending downward from the rectangular plate portion 100 and extending in the fore and aft direction.

The depending piece 102 is a cantilever piece, and includes a through hole 103 that is provided with a shoulder, and extends in the axial direction (the lateral direction) of the crankshaft 24. A cylindrical fixed bush 106 is fitted in the through hole 103 of the depending piece 102 so as to be restricted from moving rightward and rotationally fast (fixed).

A female screw 108 is formed on the inner peripheral surface of the fixed bush 106. A male screw 109 formed on the outer peripheral surface of a movable bush 110 is threaded into the female screw 108 so as to be threaded into and out of the female screw 108 in the axial direction of the crankshaft 24 or in the lateral direction.

The movable bush 110 is provided with a flange portion 112 on the side thereof facing away from the fixed bush 106. The outer circumference of the flange portion 112 is provided with an uneven shape like flower petals so that the movable bush 110 can be turned by hand. The flange surface of the flange portion 112 directly opposes and is in direct contact with the end surface of a boss portion (joining portion) 66 formed in an upper part of the extension portion 56 of the housing 52.

The mounting member 92 supports the housing 52 in a fixed condition by means of a fastening bolt 114 that is passed centrally through the fixed bush 106 and the movable bush 110 in the axial direction of the crankshaft 24, and is threaded into a screw hole (not shown in the drawings) of the boss portion 66.

In this manner, the female screw 108 of the fixed bush 106 and the male screw 109 of the movable bush 110 jointly form a screw mechanism between the housing 52 and the frame structure 18, and this screw mechanism serves as an adjustment mechanism for adjusting (increasing and decreasing) the distance between the mounting member 92 and the housing 52 in the axial direction of the crankshaft 24.

By adjusting this distance in the axial direction, the inclination of the rotary output member 64 with respect to the central axis (crank axis) of the crankshaft 24 can be corrected. As a result, the attitude of the rotary output member 64 can be corrected such that the rotary output member 64 is in parallel with a plane orthogonal to the crank axis.

A control unit 150 for electric power assist is incorporated in the extension portion 56 of the housing 52. A battery 120 consisting of a secondary battery for powering the electric motor 58 and the control unit 150 is attached to the seat tube 12 by a fastening band (not shown in the drawings) or the like.

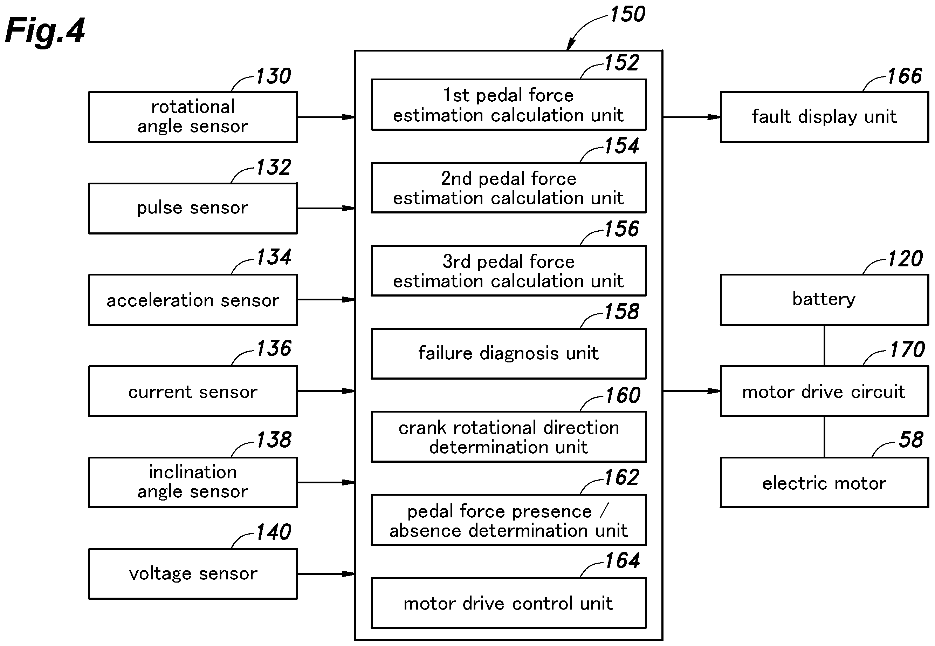

Next, the control system of the electric power assist device 50 will be described in the following with reference to FIG. 4.

The control unit 150 is connected to a rotational angle sensor 130, a pulse sensor 132, an acceleration sensor 134, a current sensor 136, an inclination angle sensor 138, and a voltage sensor 140.

The rotational angle sensor 130 is provided in the electric motor 58 or the housing 52 to detect the rotational angle of the motor or the rotational angle of the rotary output member 64 as a rotational angle (hereinafter, crank angle) θc of the crankshaft 24. The control unit 150 calculates the crank angular velocity ω, which is a first state quantity that is related to the pedal force, by time integration of the crank angle θc detected by the rotational angle sensor 130. Thus, the rotational angle sensor 130 forms a part of a second state quantity detecting unit.

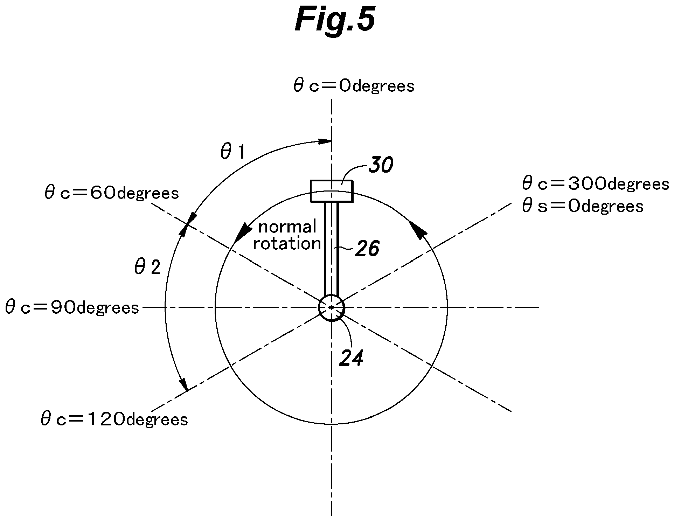

The pulse sensor 132 is provided in the housing 52 to detect a zero point (θc = 0 degrees) of the crank angle θc for each rotation of the rotary output member 64. As shown in FIG. 5, the crank angle θc = 0 degrees is predefined to be the rotational angle of the crankshaft 24 when the pedal 30 of the crank arm 26 is located at the highest position (top dead center position).

The actual zero point (θs = 0 degrees) of the pulse sensor 132 may not be the crank angle at which the pedal 30 is located at the highest position, and may be, for example, a rotational angle corresponding to the crank angle θc = 300 degrees. In this case, the calibration operation for eliminating the phase difference of 300 degrees between θc = 0 degrees and θs = 0 degrees is performed in the control unit 150.

The acceleration sensor 134 is a first state quantity detecting unit, which is provided in the housing 52 to detect the acceleration (vehicle body acceleration) α in the fore and aft direction (traveling direction) of the bicycle 10 as a first state quantity that is related to the pedal force.

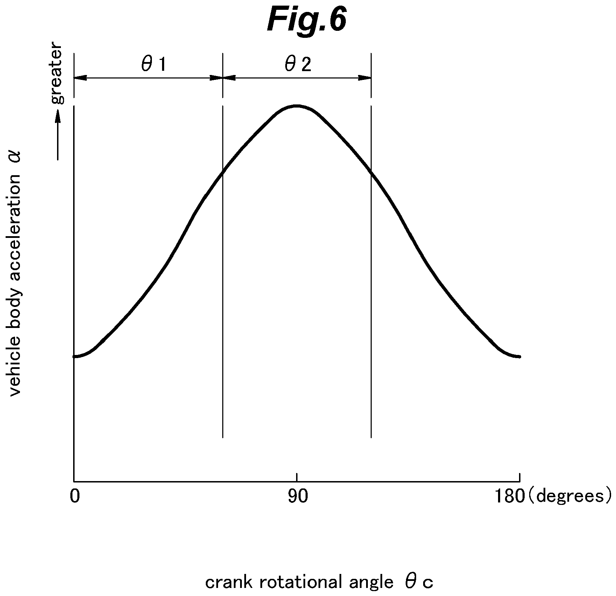

As shown in FIG. 6, the vehicle body acceleration α changes in response to the crank angle θc in a sinusoidal manner with a cycle of 180 degrees so as to be at the minimum at θc = 0 degrees, at the maximum at θc = 90 degrees, at the minimum once again at θc = 180 degrees, at the maximum once again at θc = 270 degrees, and at the maximum at θc = 360 degrees, and is related to the peal force.

The control unit 150 calculates the crank angular velocity ω, which is a second state quantity that is related to the pedal force, by time integration of the crank angle θc detected by the rotational angle sensor 130. Thus, the rotational angle sensor 130 forms a part of a second state quantity detecting unit.

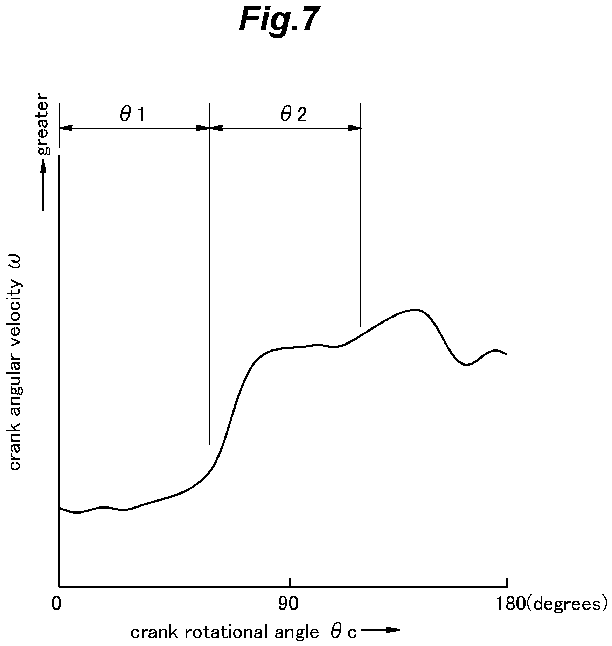

As shown in FIG. 7, the crank angular velocity ω is at a minimum at θc = 0 degrees and increases from at about θc = 60 degrees in a cycle of 180 degrees, and is related to the pedal force.

The current sensor 136 is a third state quantity detecting unit, and detects the motor current value i of the electric motor 58 as a third state quantity that is related to the pedal force.

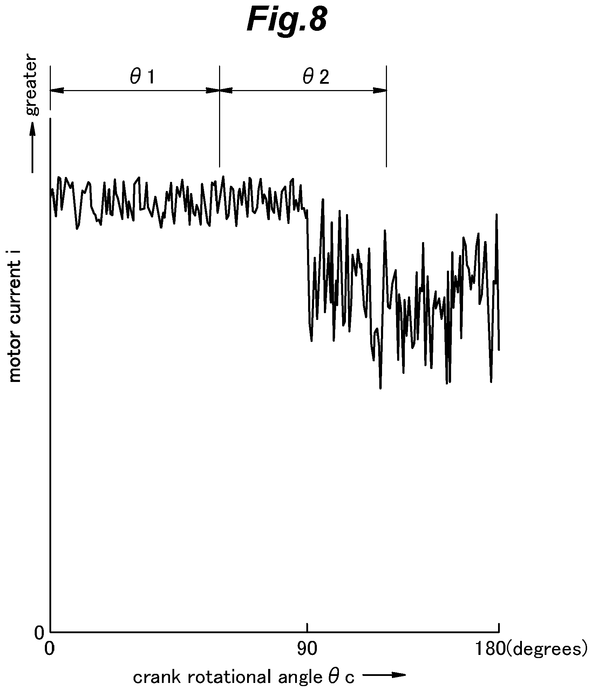

As shown in FIG. 8, the motor current value i is at a maximum at θc = 0 degrees, and decreases from at about θc = 60 degrees in a cycle of 180 degrees, and is related to the pedal effort.

The inclination angle sensor 138 is provided on the housing 52 to detect the tilt angle of the frame structure 18 of the bicycle 10 with respect to the direction of gravity, or the tilt angle of the frame structure 18 of the bicycle 10 in the fore and aft direction and the lateral direction with respect to the plumb line.

Both the vehicle body acceleration α detected by the acceleration sensor 134 and the inclination angle of the bicycle 10 with respect to the plumb line detected by the inclination angle sensor 138 may also be acquired by arithmetically processing the output signal of a gyro sensor provided with a G sensor.

The voltage sensor 140 detects the voltage of the battery 120.

The control unit 150 is an electronically controlled device including a microcomputer and the like, and is provided with a first pedal force estimation calculation unit 152, a second pedal force estimation calculation unit 154, a third pedal force estimation calculation unit 156, a failure diagnosis unit 158, a crank rotational direction determination unit 160, a pedal force detection unit 162, and a motor drive control unit 164.

The first pedal force estimation calculation unit 152 may also be called as a pedal force estimation calculation unit corresponding to the vehicle body acceleration. The first pedal force estimation calculation unit 152 receives information on the crank rotational angle θc from the rotational angle sensor 130, information on the crank rotational angle θc = 0 degrees of the crankshaft 24 from the pulse sensor 132, and information on the vehicle body acceleration α from the acceleration sensor 134 with respect to the fore and aft direction of the bicycle 10, and estimates the pedal force of the bicycle 10 from the variance between the average value A1 of the vehicle body acceleration α over a crank angle range θ1 as measured from the angular position θc = 0 degrees, for instance over the angle range of θ1 = 0 to 60 degrees, and the average value A2 of the vehicle body acceleration α over a crank angle range θ2 as measured from the angular position θc = 0 degrees, for instance over the angle range of θ1 = 60 to 120 degrees, in the normal rotational direction.

The variance between the average value A1 and the average value A2 of the vehicle body acceleration α may be either an arithmetic difference (A2 - A1) or a ratio (A2 / A1) between the two values. The first pedal force estimation calculation unit 152 estimates that the pedal force is greater with an increase in the difference (A2 - A1) or the ratio (A2 / A1) between the two values

The pedal force is estimated from the variance between the average value A1 of the vehicle body acceleration α over a crank angle range θ1 including the crank angle θc = 0 degrees at which the vehicle body acceleration α due to pedaling is at a minimum, and the average value A2 of the vehicle body acceleration α over a crank angle range θ2 including θc = 90 degrees at which the vehicle body acceleration α due to pedaling is at a minimum. Therefore, the pedal force can be estimated at a high precision as compared with the case where the vehicle body acceleration α at the crank angle θc = 0 degrees and θc = 90 degrees is not included or the average values are not used.

When information on the crank angle θc cannot be obtained from the rotational angle sensor 130 due to a failure in the rotational angle sensor 130, the first pedal force estimation calculation unit 152 estimates the pedal force of the bicycle 10 from the absolute value of the vehicle body acceleration α during a revolution of the crankshaft 24 which can be obtained from the signal from the pulse sensor 132.

The second pedal force estimation calculation unit 154 may be considered as a pedal force estimation calculation unit based on the crank angular velocity. The second pedal force estimation calculation unit 154 receives information on the crank rotational angle θc from the rotational angle sensor 130, information on the crank rotational angle being 0 degrees (θc = 0 degrees) from the pulse sensor 132, and information on the crank angular velocity ω which is to be integrated to provide the crank angle θc from the rotational angle sensor 130. The pedal force is estimated from the variance between the average value Q 1 of the crank angular velocity ω over a prescribed crank angle range θ2 as measured from θc = 0 degrees, for instance over a crank angle range θc = 0 degrees to 60 degrees (angle range θ2) in the normal rotational direction, and the average value Q2 of the crank angular velocity ω over a prescribed crank angle range θ2 as measured from θc = 0 degrees, for instance over a crank angle range θc = 60 degrees to 120 degrees (angle range θ2) in the normal rotational direction.

The variance between the average value Q 1 and the average value Q2 of the crank angular velocity ω is either a difference (Q2 - Ω1) or a ratio (Q2 / Ω1) between the two values. The second pedal force estimation calculation unit 154 estimates that the pedal force is greater with an increased in the difference (Ω2 - Ω1) or the ratio (Ω2 / Ω1) between the two values.

The pedal force is estimated from the variance between the average value Ω1 of the crank angular velocity ω over a prescribed crank angle range θ1 that contains θc = 0 degrees where the crank angular velocity ω due to pedaling is at a minimum and the average value Q2 of the crank angular velocity ω over a prescribed crank angle range θ2 that contains θc = 90 degrees where the crank angular velocity ω due to pedaling is at a maximum. Therefore, the pedal force can be estimated at a high precision as compared with the case where the crank angular velocity ω at the crank angle θc = 0 degrees and θc = 90 degrees is not included or the average values are not used.

When information on the crank angle θc cannot be obtained from the rotational angle sensor 130 due to a failure in the rotational angle sensor 130, the second pedal force estimation calculation unit 154 estimates the pedal force of the bicycle 10 from the absolute value of the crank angular velocity ω during a rotation of the crankshaft 24 which can be obtained from the signal from the pulse sensor 132.

The third pedal force estimation calculation unit 156 may be considered as a pedal force estimation calculation unit based on the motor current value. The third pedal force estimation calculation unit 156 receives information on the crank angle θc from the rotational angle sensor 130, information on the rotational angle θc = 0 degrees of the crankshaft 24 from the pulse sensor 132, and information on the motor current value i from the current sensor 136. The pedal force is estimated from the variance between the average value I1 of the motor current value i over a prescribed crank angle range θ2 as measured from θc = 0 degrees, for instance over a crank angle range θc = 0 degrees to 60 degrees (angle range θ2) in the normal rotational direction, and the average value I2 of the motor current value i over a prescribed crank angle range θ2 as measured from θc = 0 degrees, for instance over a crank angle range θc = 60 degrees to 120 degrees (angle range θ2) in the normal rotational direction.

The variance between the average value I1 and the average value I2 of the crank angular velocity ω is either a difference (I2 - I1) or a ratio (I2 / I1) between the two values. The third pedal force estimation calculation unit 156 estimates that the pedal force is greater with an increased in the difference (I2 - I1) or the ratio (I2 / I1) between the two values.

The pedal force is estimated from the variance between the average value I1 of the motor current value i over a prescribed crank angle range θ1 that contains θc = 0 degrees where the motor current value i due to pedaling is at a minimum and the average value I2 of the motor current value i over a prescribed crank angle range θ2 that contains θc = 90 degrees where the motor current value i due to pedaling is at a maximum. Therefore, the pedal force can be estimated at a high precision as compared with the case where the motor current i at the crank angle θc = 0 degrees and θc = 90 degrees is not included or the average values are not used.

When information on the crank angle θc cannot be obtained from the rotational angle sensor 130 due to a failure in the rotational angle sensor 130, the third pedal force estimation calculation unit 156 estimates the pedal force of the bicycle 10 from the absolute value of the motor current value i during a rotation of the crankshaft 24 which can be obtained from the signal from the pulse sensor 132.

The failure diagnosis unit 158 diagnoses the rotational angle sensor 130, the acceleration sensor 134, and the current sensor 136 for failures by evaluating the variances of the vehicle body acceleration α, the crank angular velocity ω, and the motor current value i, which are the first to third state quantities. When any of the sensors 130, 134, and 136 is determined to be faulty by performing failure diagnosis on each of the sensors 130, 134, and 136, the failure display unit 166 is turned active (turned on) by turning on a warning lamp or the like.

In a particular embodiment of the present invention, the failure diagnosis unit 158 determines that the acceleration sensor 134 is normal if the variance in the vehicle body acceleration α has a predetermined magnitude relationship with respect to a first threshold value, and determines that the acceleration sensor 134 is faulty if the variance in the vehicle body acceleration α does not have a predetermined magnitude relationship with respect to the first threshold value. For instance, the failure diagnosis unit 158 determines that the acceleration sensor 134 is normal if the variance (A2 - A1 or A2 / A1) in the average value of the vehicle body acceleration α is equal to or greater than the first threshold value, and determines that the acceleration sensor 134 is faulty if the variance (A2 - A1) or (A2 / A1) is smaller than the first threshold value.

The failure diagnosis unit 158 determines that the rotational angle sensor 130 is normal if the variance in the average value of the crank angular velocities ω has a predetermined magnitude relationship with respect to a predetermined second threshold value, and determines that the rotational angle sensor 130 is faulty if the variance in the average value of the crank angular velocities ω does not have the predetermined magnitude relationship with respect to the predetermined second threshold value. For example, the second threshold value is "1", and if the variance (S21 - Q2 or S21 / Q2) in the average value of the crank angular velocity ω is smaller than 1, the rotational angle sensor 130 is determined to be normal. Conversely, if the variance (S21 - Q2 or S21 / Q2) is equal to or greater than "1", the rotational angle sensor 130 is determined to be faulty.

The failure diagnosis unit 158 determines that the current sensor 136 is normal if the variance in the motor current value i has a predetermined magnitude relationship with respect to a third threshold value, and determines that the current sensor 136 is faulty if the variance in the motor current value i does not have the predetermined magnitude relationship with respect to the third threshold value. For instance, with the third threshold value selected as "1", the failure diagnosis unit 158 determines that the current sensor 136 is normal if the variance (I2 - I1 or I2 / I1) in the average value of the motor current value i is smaller than "1", and determines that the current sensor 136 is faulty if the variance (I2 - I1) or (I2 / I1) is equal to or greater than "1".

In this way, the failure diagnosis unit 158 can individually detect failures of the rotational angle sensor 130, the acceleration sensor 134, and the current sensor 136. The failure determination of the sensors 130, 134, 136 described above by the failure diagnosis unit 158 may be limited to the case where the true state of the determination condition has persisted for a predetermined time period.

The motor drive control unit 164 selects the first pedal force estimation calculation unit 152, the second pedal force estimation calculation unit 154, or the third pedal force estimation calculation unit 156 that corresponds to the rotational angle sensor 130, the acceleration sensor 134, or the current sensor 136 that is not determined to be faulty by the failure diagnosis unit 158, and forwards a control command for the drive torque to the motor drive circuit 170 so that the electric motor 58 is operated with an electric power (current or voltage) that corresponds to the pedal force estimated by the selected pedal force estimation calculation unit.

In a particular embodiment of the present invention, when the acceleration sensor 134 is determined to be normal by the failure diagnosis unit 158, the motor drive control unit 164 controls the drive of the electric motor 58 by forwarding a control command corresponding to the pedal force estimated by the first pedal force estimation calculation unit 152.

When the acceleration sensor 134 is determined to be faulty by the failure diagnosis unit 158, the motor drive control unit 164 controls the drive of the electric motor 58 by forwarding a control command corresponding to the pedal force estimated by the second pedal force estimation calculation unit 154 to the motor drive circuit 170, instead of the pedal force estimated by the first pedal force estimation calculation unit 152.

When the rotational angle sensor 130 is determined to be faulty by the failure diagnosis unit 158, the motor drive control unit 164 controls the drive of the electric motor 58 by forwarding a control command corresponding to the pedal force estimated by the third pedal force estimation calculation unit 156 to the motor drive circuit 170, instead of the pedal force estimated by the second pedal force estimation calculation unit 154.

When the failure diagnosis unit 158 determines that the current sensor 136 is faulty, in addition to the acceleration sensor 134 and the rotational angle sensor 130, the motor drive control unit 164 controls the drive of the electric motor 58 to be stopped.

Thus, unless all of the rotational angle sensor 130, the acceleration sensor 134, and the current sensor 136 should fail, or in other words, if any one of the rotational angle sensor 130, the acceleration sensor 134, and the current sensor 136 is normal, the power assist operation by the electric motor 58 is maintained. As a result, the possibility that the power assist operation is terminated due to the failure of the sensors that detect the state quantities used for estimating the pedal force is reduced so that the possibility of imposing a physical burden to the user owing to the loss of the power assist operation can be reduced.

The crank rotational direction determination unit 160 determines if the crankshaft 24 is rotating in the normal direction or in the reverse direction from the change in the crank angle θc detected by the rotational angle sensor 130. When the crank rotational direction determination unit 160 determines that the crankshaft 24 is rotating in the reverse direction, the motor drive control unit 164 controls the drive of the electric motor 58 to stop. As a result, unnecessary power assist is not provided when the crankshaft 24 is rotating in the reverse direction.

The pedal force detection unit 162 determines the presence / absence of pedal force being applied to the pedal 30, or if the pedal 30 is being pedaled according to the presence / absence of changes in the rotational angle θc of the crankshaft 24 detected by the rotational angle sensor 130. The motor drive control unit 164 controls to stop the drive of the electric motor 58 when the pedal force detection unit 162 determines that there is no pedal force. As a result, unnecessary power assist is not provided when there is no pedal force.

The motor drive circuit 170 quantitatively controls the electric power supplied from the battery 120 to the electric motor 58 according to the control command from the motor drive control unit 164. As a result, the electric motor 58 is enabled to assist pedaling with a drive torque determined from the estimated value of the pedal force.

The motor drive control unit 164 further controls to increase or decrease the rotational output of the electric motor 58 according to the inclination of the bicycle 10 in the lateral direction and the fore and aft direction detected by the inclination angle sensor 138. As a result, when the bicycle 10 is tilted in the lateral direction during cornering or the like, the pedaling assist is weakened, and when the bicycle 10 is tilted in the fore and aft direction on an uphill road or the like, the pedaling assist is strengthened.

As a result, appropriate pedaling assist is provided in various running conditions without excess or deficiency.

The motor drive control unit 164 further performs a correction control for reducing the rotational output of the electric motor 58 in response to a decrease in the voltage of the battery 120 detected by the voltage sensor 140. As a result, excessive discharging of the battery 120 can be avoided so that the service life of the battery 120 can be extended. In addition, the power consumption of the battery 120 is reduced so that the assist continuation distance (time) with a single charge of the battery 120 can be extended.

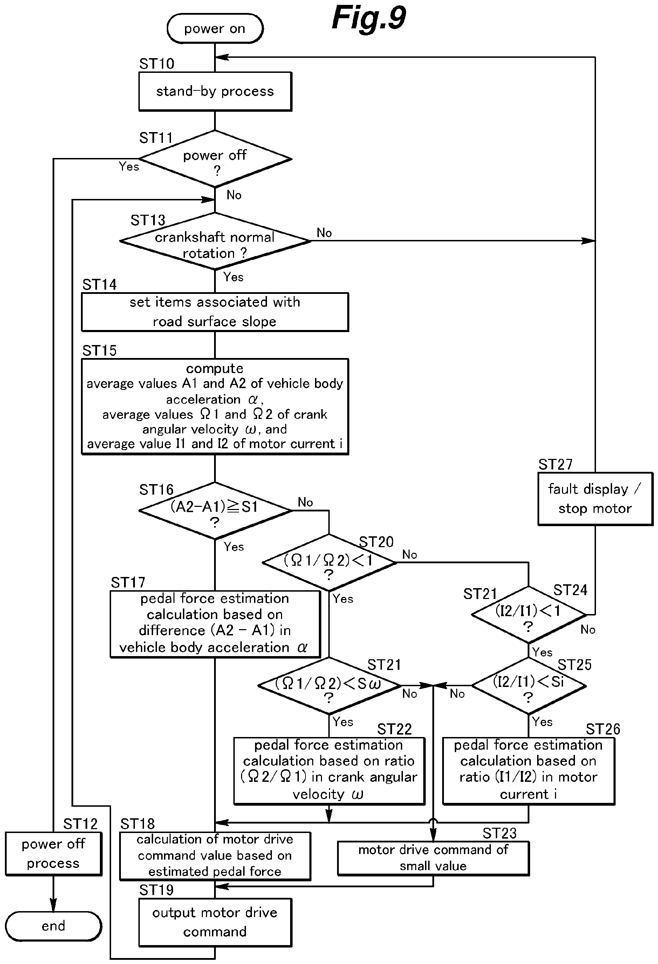

Next, the control routine of the control unit 150 according to the present embodiment will be described in the following with reference to the flowchart shown in FIG. 9.

This control routine is initiated when the power of the electric power assist device 50 is turned on, and a standby state process is performed first of all (step ST10). The standby state process includes a process whereby the various sensors 130, 132, 134, 136, 138, 140 are powered into an active state, and the electric motor 58 is put into a stopped state.

Next, it is determined if the power supply of the electric power assist device 50 has transitioned from on to off (step ST11). When the power is changed from on to off (step ST11: Yes), a power-off process is performed (step ST12). The power-off process includes a process whereby power supply to the sensors 130, 132, 134, 136, 138, 140 is terminated.

When the power supply has not transitioned to off (step ST11: No), it is determined if the crankshaft 24 is rotating in the normal direction from the signal provided by the rotational angle sensor 130 (step ST13). If the crankshaft 24 is not rotating in the normal direction (step ST12: No), or, in other words, if the pedal 30 is not being pedaled, the process flow returns to the standby state process (step ST10), and the electric motor 58 is maintained in the stopped state without providing power assist.

When the crankshaft 24 is rotating in the normal direction (step ST12: Yes), items such as parameters and correction values associated with the slope in the road surface in the estimation of the pedal force are set (step ST14). The setting of the items associated with the slope in the road surface is performed according to the inclination angle of the bicycle 10 in the fore and aft direction, or the state of the slope in the road surface which can be detected from the signal from the inclination angle sensor 138. For example, when the bicycle 10 is traveling on a downhill road, the estimated value of the pedal force is set to decrease or become zero regardless of the acceleration in the fore and aft direction of the vehicle body detected by the acceleration sensor 134. When the bicycle 10 is traveling on an uphill road, the estimated value of the pedal force based on the fore and aft acceleration of the vehicle body is set to be greater as compared to the case where the bicycle 10 is traveling on a flat road surface. Further, when the bicycle 10 is cornering, the estimated value of the pedal force based on the acceleration in the lateral direction of the vehicle body is set to be smaller as compared to the case where the bicycle 10 is traveling on a flat road surface.

Next are calculated the average value A1 of the vehicle body acceleration α over the crank angle range θ1 and the average value A2 of the vehicle body acceleration α over the crank angle range θ2 detected by the acceleration sensor 134, the average value Ω1 of the crank angular velocity ω over the crank angle range θ1 and the average value Q2 of the crank angular velocity ω over the crank angle range θ2 calculated from the crank angle θc detected by the rotational angle sensor 130, and the average value I1 of the motor current i over the crank angle range θ1 and the average value I2 of the motor current i over the crank angle range θ2 detected by the current sensor 136 (step ST15).

Next, it is determined if the average value A2 - average value A1 of the vehicle body acceleration α is equal to or greater than a predetermined first threshold value S1 (step ST16).

If the average value A2 - average value A1 is equal to or greater than the first threshold value S1 (step ST16: Yes), the pedal force of the bicycle 10 is estimated from the average value A2 - average value A1 (step ST17). The motor drive command value is calculated from the estimated value of the pedal force (step ST18), and the signal of the corresponding motor drive command value is outputted to the motor drive circuit 170 (step ST19).

As a result, the electric motor 58 is driven according to the pedal force of the bicycle 10 estimated from the average value A2 - average value A1 of the vehicle body acceleration α, and electric power assist is provided according to the pedal force of the bicycle 10.

If the average value A2 - average value A1 is smaller than the first threshold value S1 (step ST16: No), since it can be assumed that the acceleration sensor 134 is faulty, it is determined if the average value S21 / average value Q2 of the crank angular velocity ω is smaller than "1" (second threshold value S2) which is set in advance (step ST20). The determination in step ST20 may also be performed by comparing the crank angular velocity ω1 at a crank angle θc = 0 degrees with the crank angular velocity ω2 at a crank angle θc = 90 degrees.

If the average value S21 / average value Q2 is smaller than "1" (step ST20: No), then it is determined if the average value Ω1 / average value Q2 is smaller than a predetermined threshold value Sω which is greater than "1" (Step ST21).

If the average value Ω1 / average value Q2 is smaller than the threshold value Sω (step ST21: Yes), the pedal force of the bicycle 10 is estimated from the average value Q2 / average value Ω1 (step ST22). The motor drive command value is calculated from the estimated pedal force (step ST18), and the signal of the corresponding motor drive command value is outputted to the motor drive circuit 170 (step ST19).

As a result, when the acceleration sensor 134 is faulty, the signal of the motor drive command value estimated from the average value A2 / average value A1 of the crank angular velocity ω is outputted to the motor drive circuit 170 before the program flow returns to step ST13.

If the average value Ω1 / average value Q2 is equal to or greater than the threshold value Sω (step ST21: No), the motor drive command value is set to a predetermined small fixed value (step ST23), and the signal of the corresponding motor drive command value is outputted to the motor drive circuit 170 (step ST19). As a result, the electric motor 58 is driven with a low torque, and a weak electric assist is provided.

If the average value Ω1 / average value Q2 is equal to or greater than "1" (step ST20: Yes), since it can be assumed that the rotational angle sensor 130 is faulty, it is determined if the average value I2 / average value I1 of the motor current value i is smaller than "1" (third threshold value S3) (step ST24).

If the average value I2 / average value I1 is smaller than "1" (step ST24: Yes), it is determined if the average value I2 / I1 is smaller than a predetermined threshold value Iω greater than "1". (Step ST25).

If the average value I2 / I1 is smaller than the threshold value Iω (step ST25: Yes), a calculation is performed to estimate the pedal force of the bicycle 10 from the average value I1 / I2 (step ST26), and the motor drive command value is calculated from the estimated value of the pedal force (step ST18). The signal of the thus obtained motor drive command value is outputted to the motor drive circuit 170 (step ST19).

As a result, when the rotational angle sensor 130 fails in addition to the acceleration sensor 134, the electric motor 58 is driven according to the pedal force of the bicycle 10 estimated from the average value I2 / I1 of the motor current value i. As a result, electric power assist is provided according to the pedal force of the bicycle 10.

If the average value I2 / I1 is equal to or greater than the threshold value Iω (step ST25: No), the motor drive command value is set to a predetermined small fixed value (step ST23), and the signal of the corresponding motor drive command value is outputted to the motor drive circuit 170 (step ST19). As a result, the electric motor 58 is driven with a low torque, and a weak electric power assist is provided.

If the average value I2 / I1 is equal to or greater than "1" (step ST24: No), it can be assumed that the current sensor 136 is faulty, in addition to the acceleration sensor 134 and the rotational angle sensor 130, so that a failure display is made by lighting a warning lamp or the like, and the electric motor 58 is stopped (step ST27) before the process flow returns to step ST10.

As a result, when all of the acceleration sensor 134, the rotational angle sensor 130, and the current sensor 136 are faulty, the electric motor 58 is stopped.

A control unit 150 according to another embodiment of the present invention will be described in the following.

The first pedal force estimation calculation unit 152, the second pedal force estimation calculation unit 154, the third pedal force estimation calculation unit 156, the crank rotational direction determination unit 160, and the pedal force detection unit 162 of the present embodiment are substantially the same as those of the previous embodiment described above.

The failure diagnosis unit 158 of the present embodiment determines that all of the rotational angle sensor 130, the acceleration sensor 134 and the current sensor 136 are normal in case where the variance (Q2 - Q1 or Q2 / S21) between the average values Q 1 and Q2 of the crank angular velocity ω is equal to or greater than a predetermined fifth threshold value and the variance between the values A1 and A2 (A2 - A1 or A2 / A1) is equal to or greater than the predetermined fourth threshold value, if the variance between the average motor current values I1 and I2 (I1 - I2 or I1 / I2) is equal to or greater than the predetermined sixth threshold value and the variance (Q2 - Ω1 or Q2 / Ω1) between the average values Q 1 and Q2 of the crank angular velocity ω is equal to or greater than the predetermined fifth threshold value.

In this case, the motor drive control unit 164 outputs to the motor drive circuit 170 a control command based on the pedal force estimated by the first pedal force estimation calculation unit 152 from the vehicle body acceleration α, the pedal force estimated by the second pedal force estimation calculation unit 154 from the crank angular velocity ω, or the pedal force estimated by the third pedal force estimation calculation unit 156 from the motor current value i.

The failure diagnosis unit 158 determines that the acceleration sensor 134 is faulty in case where the variance (Q2 - Ω1 or Q2 / Ω1) between the average values Ω1 and Q2 of the crank angular velocity ω is equal to or greater than the predetermined fifth threshold value and the variance (A2 - A1 or A2 / A1) between the average values A1 and A2 of the vehicle body acceleration α is smaller than the predetermined fourth threshold value, if the variance (I1 - I2 or I1 / I2) between the average values I1 and I2 of the motor current values i is smaller than the sixth threshold value and the variance (A2 - A1 or A2 / A1) between the average values A1 and A2 of the vehicle body acceleration α is smaller than the predetermined fourth threshold value.

In this case, the motor drive control unit 164 outputs to the motor drive circuit 170 a control command based on the pedal force estimated by the second pedal force estimation calculation unit 154 from the crank angular velocity ω, or the pedal force estimated by the third pedal force estimation calculation unit 156 from the motor current value i.

The failure diagnosis unit 158 determines that the rotational angle sensor 130 is faulty in case where the variance (Q2 - Q1 or Q2 / S21) between the average value Q1 and Q2 of the crank angular velocity ω is equal to or greater than the predetermined fifth threshold value and the variance (A2 - A1 or A2 / A1) between the average values A1 A2 of the vehicle body acceleration α is smaller than the predetermined fourth threshold value, if the variance (I1 - I2 or I1 / I2) between the average values I1 and I2 of the motor current values i is smaller than the sixth threshold value and the variance (A2 - A1 or A2 / A1) between the average values A1 and A2 of the vehicle body acceleration α is smaller than the fourth threshold value.

In this case, the motor drive control unit 164 outputs to the motor drive circuit 170 a control command based on the pedal force estimated by the first pedal force estimation calculation unit 152 from the vehicle body acceleration α, or the pedal force estimated by the third pedal force estimation calculation unit 156 from the motor current value i.

The failure diagnosis unit 158 determines that the current sensor 136 is faulty in case where the variance (Q2 - Ω1 or Q2 / Ω1) between the average values Ω1 and Q2 of the crank angular velocity ω is equal to or greater than the predetermined fifth threshold value and the variance (A2 - A1 or A2 / A1) between the average values A1 and A2 of the vehicle body acceleration α is equal to or greater than the predetermined fourth threshold value, if the variance (I1 - I2 or I1 / I2) between the average values I1 and I2 of the motor current values i is equal to or greater than the sixth threshold value and the variance (Q2 - Q1 or Q2 / S21) between the average value Q1 and Q2 of the crank angular velocity ω is smaller than the fifth threshold value.

In this case, the motor drive control unit 164 outputs to the motor drive circuit 170 a control command to the motor drive circuit 170 based on the pedal force estimated by the first pedal force estimation calculation unit 152 from the vehicle body acceleration α, or the pedal force estimated by the second pedal force estimation calculation unit 154 from the crank angular velocity ω.

Further, the failure diagnosis unit 158 determines that the current sensor 136 is also faulty in case where the acceleration sensor 134 is determined to be faulty, the variance (I1 - I2 or I1 / I2) between the average values I1 and I2 of the motor current values i is equal to or greater than the sixth threshold value and the variance (Q2 - Ω1 or Q2 / Q 1) between the average values Q 1 and Q2 of the crank angular velocity ω is equal to or greater than the fifth threshold value, if the variance (I1 - I2 or I1 / I2) between the average value I1 and I2 of the motor current value i is equal to or greater than the sixth threshold value.

In this case, the motor drive control unit 164 outputs to the motor drive circuit 170 a control command based on the pedal force estimated by the second pedal force estimation calculation unit 154 from the crank angular velocity ω.

Further, the failure diagnosis unit 158 determines that the rotational angle sensor 130 is also faulty in case where the acceleration sensor 134 is determined to be faulty if the variance (I1 - I2 or I1 / I2) between the average values I1 and I2 of the motor current values i is equal to or greater than the sixth threshold value and the variance (Q2 - Q1 or Q2 / S21) between the average values S21 and Q2 of the crank angular velocity ω is smaller than the fifth threshold value.

In this case, the motor drive control unit 164 outputs to the motor drive circuit 170 a control command based on the pedal force estimated by the third pedal force estimation calculation unit 156 from the motor current value i.

Further, when the failure diagnosis unit 158 determines that the current sensor 136 is also faulty in case where the acceleration sensor 134 is determined to be faulty, the variance (Q2 - Ω1 or Q2 / Ω1) between the average values Q 1 and Q2 of the crank angular velocity ω is smaller than the fifth threshold value and the variance (I1 - I2 or I1 / I2) between the average values I1 and I2 of the motor current values i is equal to or greater than the sixth threshold value if the ratio (I2 / I1) of the average values of the motor current value i is greater than "1".

In this case, the motor drive control unit 164 outputs to the motor drive circuit 170 a control command for stopping the drive of the electric motor 58.

Further, the failure diagnosis unit 158 determines that the current sensor 136 is also faulty in the event where the rotational angle sensor 130 is determined to be faulty, the variance (I1 - I2 or I1 / I2) between the average values I1 and I2 of the motor current values i is equal to or greater than the sixth threshold value and the variance (A2 - A1 or A2 / A1) between the average values A1 and A2 of the vehicle body acceleration α is equal to or greater than the fourth threshold value if the variance (A2 - A1 or A2 / A1) between the average values A1 and A2 of the vehicle body acceleration α is equal to or greater than the fourth threshold value S4 and the variance (I1 - I2 or I1 / I2) between the average values I1 and I2 of the motor current value i is smaller than the sixth threshold value S6.

In this case, the motor drive control unit 164 outputs to the motor drive circuit 170 a control command based on the pedal force estimated by the first pedal force estimation calculation unit 152 from the vehicle body acceleration α.

Further, the failure diagnosis unit 158 determines that the acceleration sensor 134 is also faulty in case where the rotational angle sensor 130 is determined to be faulty if the variance (I1 - I2 or I1 / I2) between the average values I1 and I2 of the motor current values i is equal to or greater than the sixth threshold value, and the variance (A2 - A1 or A2 / A1) between the average values A1 and A2 of the vehicle body acceleration α is smaller than the fourth threshold value.

In this case, the motor drive control unit 164 outputs to the motor drive circuit 170 a control command based on the pedal force estimated by the third pedal force estimation calculation unit 156 from the motor current value i.

Further, the failure diagnosis unit 158 determines that the current sensor 136 is also faulty in the event where the rotational angle sensor 130 is determined to be faulty, the variance (I1 - I2 or I1 / I2) between the average values I1 and I2 of the motor current values i is equal to or greater than the sixth threshold value, and the variance (A2 - A1 or A2 / A1) between the average values A1 and A2 of the vehicle body acceleration α is smaller than the fourth threshold value, if the ratio (I2 / I1) of the average values of the motor current values i is larger than "1".

In this case, the motor drive control unit 164 outputs to the motor drive circuit 170 a control command for stopping the drive of the electric motor 58.

Further, the failure diagnosis unit 158 determines that the rotational angle sensor 130 is also faulty in the event where the current sensor 136 is determined to be faulty, the variance (Q2 - Q1 or Q2 / Ω1) between the average values S21 and Q2 of the crank angular velocity ω is equal to or greater than the fifth threshold value, and the variance (A2 - A1 or A2 / A1) between the average values A1 and A2 of the vehicle body acceleration α is equal to or greater than the fourth threshold value, if the variance (Ω2 - Ω1 or Ω2 / Ω1) between the average values Ω1 and Q2 of the crank angular velocity ω is smaller than the fifth threshold value, and the variance (A2 - A1 or A2 / A1) of the average values A1 and A2 of the vehicle body acceleration α is equal to or greater than the fourth threshold value.

In this case, the motor drive control unit 164 outputs to the motor drive circuit 170 a control command based on the pedal force estimated by the first pedal force estimation calculation unit 152 from the vehicle body acceleration α.

Further, the failure diagnosis unit 158 determines that the acceleration sensor 134 is also faulty in the event where the current sensor 136 is determined to be faulty, if the variance (Ω2 - Ω1 or Ω2 / Ω1) between the average values Q 1 and Q2 of the crank angular velocity ω is equal to or greater than the fifth threshold value, and the variance (A2 - A1 or A2 / A1) between the average values A1 and A2 of the vehicle body acceleration α is smaller than the fourth threshold value.

In this case, the motor drive control unit 164 outputs to the motor drive circuit 170 a control command based on the pedal force estimated by the second pedal force estimation calculation unit 154 from the crank angular velocity ω.

Further, when the failure diagnosis unit 158 determines that the rotational angle sensor 130 is also faulty in the event where the current sensor 136 is determined to be faulty, the variance (Q2 - Q1 or Q2 / Ω1) between the average values S21 and Q2 of the crank angular velocity ω is equal to or greater than the fifth threshold value, and the variance (A2-A1 or A2 / A1) between the average values A1 and A2 of the vehicle body acceleration α is smaller than the fourth threshold value, if the ratio of the average values of the crank angular velocity ω (Ω1 / Ω2) is greater than "1".

In this case, the motor drive control unit 164 outputs to the motor drive circuit 17 a control command for stopping the drive of the electric motor 58.

Owing to this control process, in this embodiment also, unless all of the rotational angle sensor 130, the acceleration sensor 134, and the current sensor 136 are faulty, or as long as at least one of the rotational angle sensor 130, the acceleration sensor 134, and the current sensor 136 is normal, the power assist operation by the electric motor 58 is maintained. As a result, the possibility that the power assist operation is stopped due to the failure of the sensors that detect the state quantities used for estimating the pedal force is reduced, and the possibility of imposing a physical burden of pedaling to the driver due to the ceasing of the power assist operation is reduced.

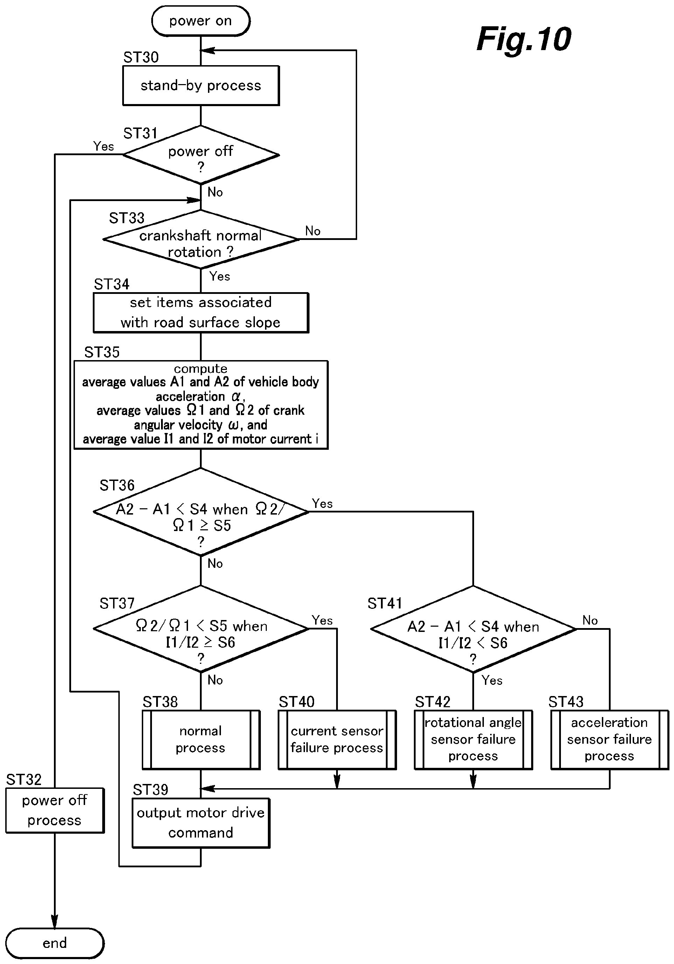

Next, the control routine of the control unit 150 of the present embodiment will be described in the following with reference to the flowchart shown in FIG. 10.

This control routine is initiated when the power of the electric power assist device 50 is turned on, and a standby state processing is performed first of all (step ST30). The standby state process includes a process of bringing the sensors 130, 132, 134, 136, 138, 140 into an active state by feeding power and a process of placing the electric motor 58 in a stopped state.

Next, it is determined if the state of power supply of the electric power assist device 50 has changed from on to off (step ST31). When the state of power supply is changed from on to off (step ST31: Yes), a power-off process is performed (step ST32). The power-off process includes a process of stopping power supply to the sensors 130, 132, 134, 136, 138, 140.

If the power supply has not changed to off (step ST31: No), it is determined if the crankshaft 24 is rotating in the normal direction from the signal supplied by the rotational angle sensor 130 (step ST33). If the crankshaft 24 is not rotating in the normal direction (step ST33: No), or if the pedal 30 is not being pedaled, the process flow returns to the standby state process (step ST30), and the electric motor 58 is maintained in the stopped state without providing power assist.

If the crankshaft 24 is rotating in the normal direction (step ST33: Yes), items such as parameters and correction values associated with a sloping road surface in the estimation of the pedal force are set (step ST34). The setting of the items associated with a sloping road surface is performed according to the inclination angle of the bicycle 10 in the fore and aft direction, or the state of the sloping road surface which can be known from the signal from the inclination angle sensor 138. For example, when the bicycle 10 is traveling on a downhill road, the estimated value of the pedal force is set to decrease or become zero regardless of the acceleration in the fore and aft direction of the vehicle body detected by the acceleration sensor 134. When the bicycle 10 is traveling an uphill slope, the estimated value of the pedal force based on the acceleration in the fore and aft direction of the vehicle body is set to be larger than that when traveling on a flat road. Further, when the bicycle 10 is cornering, the estimated value of the pedal force based on the acceleration in the lateral direction of the vehicle body is set to be smaller than that when traveling on a flat road.

Next, the average values A1 and A2 of the vehicle body acceleration α detected by the acceleration sensor 134 over the crank angle range θ1 and the crank angle range θ2, respectively, the average values Ω1 and Ω2 of the crank angular velocity ω calculated from the crank angle θc detected by the rotational angle sensor 130 over the crank angle range θ1 and the crank angle range θ2, respectively, and the average values I1 and I2 of the motor current value i detected by the current sensor 136 over the crank angle range θ1 and the rotational angle range θ2, respectively, are calculated (step ST35).

Next, it is determined if the average value A2 - average value A1 of the vehicle body acceleration α is smaller than the predetermined fourth threshold value S4 when the average value Ω2 / average value Ω1 of the crank angular velocity ω is equal to the predetermined fifth threshold value S5. (Step ST36).

When the average value Ω2 / average value Ω1 of the crank angular velocity ω is smaller than the predetermined fifth threshold value S5, and the average value A2-average value A1 of the vehicle body acceleration α is equal to or greater than the fourth threshold value S4 (step ST36: No), it is determined if the average value Ω2 / average value Ω1 of the crank angular velocity ω is smaller than the fifth threshold value S5 when the average value I1 / I2 of the motor current value i is equal to or greater than the predetermined sixth threshold value S6 (Step ST37).

If the average value Ω2 / average value Ω1 of the crank angular velocity ω is equal to or greater than the fifth threshold value S5 when the average value I1 / I2 of the motor current value i is equal to or greater than the predetermined sixth threshold value S6 (Step ST37: No), normal process is executed (step ST38), and a motor drive command value based on the pedal force estimated by the normal process is outputted (step ST39) before the process flow returns to step ST33.

If the average value Ω2 / average value Ω1 of the crank angular velocity ω is equal to or greater than the fifth threshold value S5 when the average value I1 / I2 of the motor current value i is equal to or greater than the predetermined sixth threshold value S6 (Step ST37: Yes), since the current sensor 136 can be assumed as having failed, a current sensor failure process is executed (step ST40), and the motor drive command value based on the pedal force estimated from the current sensor failure process is outputted (Step ST39) before the process flow returns to step ST33.

If the average value A2 - average value A1 of the vehicle body acceleration α is smaller than the fourth threshold value S4 (step ST36: Yes) when the average value Ω2 / average value S21 of the crank angular velocity ω is the fifth threshold value S5, it is determined if the average value A2 - average value A1 of the vehicle body acceleration α is smaller than the fourth threshold value S4 when the average value I1 / I2 of the motor current value i is smaller than the sixth threshold value S6 (Step ST41).

If the average value A2 - average value A1 of the vehicle body acceleration α is smaller than the fourth threshold value S4 when the average value I1 / I2 of the motor current value i is smaller than the sixth threshold value S6 and (step ST41: Yes), since the rotational angle sensor 130 can be assumed as having failed, the rotational angle sensor failure process is executed (step ST42), and the motor drive command value based on the pedal force estimated from the rotational angle sensor failure process is outputted (step ST39) before the process flow returns to step ST33.

If the average value A2 - average value A1 of the vehicle body acceleration α is equal to or greater than the fourth threshold value S4 when the average value I1 / I2 of the motor current value i is smaller than the sixth threshold value S6 (step ST41: No), since the acceleration sensor 134 can be assumed as having failed, the acceleration sensor failure process is executed (step ST42), and the motor drive command value based on the estimated pedal force is outputted (step ST39) before the process flow returns to step ST33.

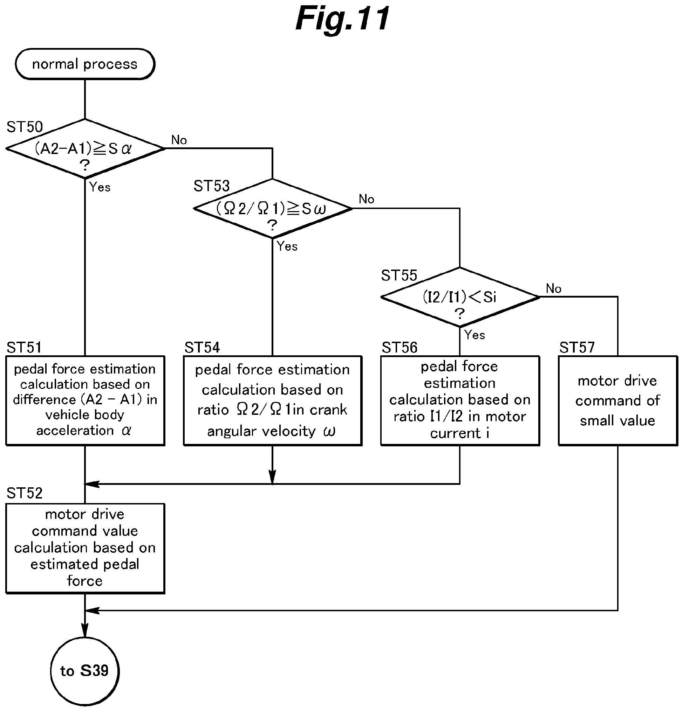

Next, the normal process routine will be described in the following with reference to FIG. 11.

First of all, it is determined if the average value A2 - average value A1 of the vehicle body acceleration α is equal to or greater than a threshold value Sα (step ST50).

If the average value A2 - average value A1 of the vehicle body acceleration α is equal to or greater than the threshold value Sα (step ST50: Yes), the calculation for estimating the pedal force of the bicycle 10 is executed based on the average value A2-average value A1 of the vehicle body acceleration α (Step ST51), and the motor drive command value is calculated based on the estimated value of the pedal force (step ST52) before the normal process routine is concluded.

As a result, the electric motor 58 is driven according to the pedal force of the bicycle 10 estimated from the vehicle body acceleration α, and electric power assist is provided.

If the average value A2 - average value A1 of the vehicle body acceleration α is smaller than the threshold value Sα (step ST50: No), it is then determined if the ratio Ω2 / Ω1 of the average values of the crank angular velocity ω is equal to or greater than the predetermined threshold value Sω (step ST53).

If the ratio Ω2 / Ω1 of the average values of the crank angular velocity ω is equal to or greater than the threshold value Sω (step ST53: Yes), the pedal force of the bicycle 10 is estimated by calculation from the average value Ω2 / average value Ω1 of the crank angular velocity ω (step ST54), and based on the estimated value of the pedal force, the motor drive command value is calculated (step ST52) before the normal process routine is concluded.

As a result, the electric motor 58 is driven according to the pedal force of the bicycle 10 estimated from the crank angular velocity ω, and electric power assist is provided.

If the average value Ω2 / Ω1 of the crank angular velocity ω is smaller than the threshold value Sω (step ST53: No), then it is determined if the average value I2 / average value I1 of the motor current value i is smaller than a predetermined threshold value Si (step ST55).

If the average value I2 / average value I1 of the motor current value i is smaller than the threshold value Si (step ST55: Yes), calculation is performed to estimate the pedal force of the bicycle 10 from the average value I1 / average value I2 of the motor current value i (step ST56), and the motor drive command value is calculated from the estimated value of the pedal force (step ST52) before the normal process routine is concluded.

As a result, the electric motor 58 is driven according to the pedal force of the bicycle 10 estimated from the motor current value i, and electric power assist is provided.

If the average value I2 / average value I1 of the motor current value i is equal to or greater than the threshold value Sω (step ST55: No), the motor drive command value is set to a predetermined small fixed value (step ST57), and the normal process routine is concluded. As a result, the electric motor 58 is driven with a low torque, and a weak electric power assist is provided.

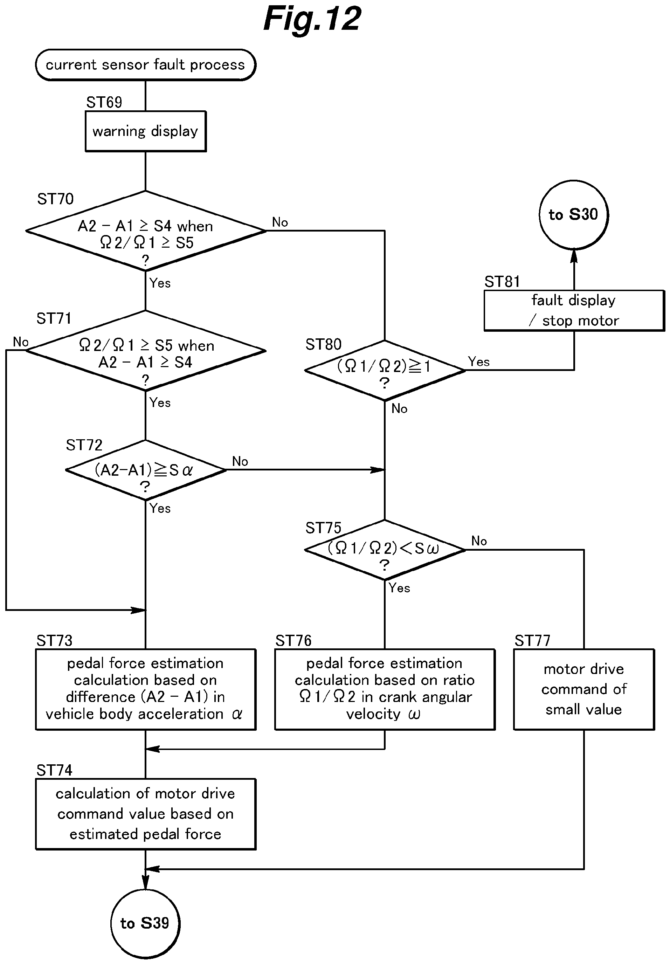

Next, a current sensor failure process routine will be described in the following with reference to FIG. 12.

First of all, a warning is displayed to the effect that the current sensor 136 is faulty (step ST69).

Next, it is determined if the average value A2 - average value A1 of the vehicle body acceleration α is equal to or greater than the fourth threshold value S4 when the average value Q2 / average value S21 of the crank angular velocity ω is equal to or greater than the fifth threshold value S5 (Step ST70).

If the average value A2 - average value A1 of the vehicle body acceleration α is equal to or greater than the fourth threshold value S4 when the average value Q2 / average value Ω1 of the crank angular velocity ω is equal to or greater than the fifth threshold value S5 (step ST70: Yes), since the acceleration sensor 134 can be assumed to be normal, it is determined if the average value Ω2 / average value Ω1 of the crank angular velocity ω is equal to or greater than the fifth threshold value S5 when the average value A2 - average value A1 of the vehicle body acceleration α is equal to or greater than the fourth threshold value S4 (step ST71).

If the average value Ω2 / average value Ω1 of the crank angular velocity ω is equal to or greater than the fourth threshold value S4 when the average value A2-average value A1 of the vehicle body acceleration α is equal to or greater than the fifth threshold value S5 (step ST71: Yes), since the rotational angle sensor 130 can be also assumed to be normal, it is then determined if the average value A2 - average value A1 of the vehicle body acceleration α is equal to or greater than the threshold value Sα (step ST72).

If the average value A2 - average value A1 of the vehicle body acceleration α is equal to or greater than the threshold value Sα (step ST72: Yes), the calculation for estimating the pedal force of the bicycle 10 is performed based on the average value A2 - average value A1 of the vehicle body acceleration α (Step ST73), and the motor drive command value is calculated from the estimated value of the pedal force (step ST74) before the current sensor failure process routine is concluded.

As a result, the electric motor 58 is driven according to the pedal force of the bicycle 10 estimated from the vehicle body acceleration α, and the electric power assist is provided.

If the average value Ω2 / average value Ω1 of the crank angular velocity ω is smaller than the fifth threshold value S5 when the average value A2 - average value A1 of the vehicle body acceleration α is equal to or greater than the fourth threshold value S4 (step ST71: No), since the rotational angle sensor 130 can be also be assumed as being faulty, the process flow skips step ST72 and proceeds to step ST73.

If the average value A2 - average value A1 of the vehicle body acceleration α is smaller than the threshold value Sα (step ST72: No), it is then determined if the average value Q 1 / average value Q2 of the crank angular velocity ω is smaller than the predetermined threshold value Sω (step ST75).

If the average value Q 1 / average value Q2 of the crank angular velocity ω is smaller than the threshold value Sω (step ST72: Yes), the pedal force of the bicycle 10 is estimated from the average value Q2 / average value Ω1 of the crank angular velocity ω (step ST76), and the motor drive command value is calculated from the estimated value of the pedal force (step ST74) before the current sensor failure process routine is concluded.

As a result, the electric motor 58 is driven according to the pedal force of the bicycle 10 estimated from the crank angular velocity ω, and electric power assist is provided.

If the average value Q 1 / average value Q2 of the crank angular velocity ω is equal to or greater than the threshold value Sω (step ST75: No), the motor drive command value is set to a predetermined small fixed value (step ST77), and the current sensor failure process routine is concluded. As a result, the electric motor 58 is driven with a low torque, and a weak electric assist is provided.

If the average value Q2 / average value Q 1 of the crank angular velocity ω is smaller than the fourth threshold value S4 when the average value A2 - average value A1 of the vehicle body acceleration α is equal to or greater than the fifth threshold value S5 (step ST70: No), since the acceleration sensor 134 can also be assumed as being faulty, it is determined if the average value Q 1 / average value Q2 of the crank angular velocity ω is equal to or greater than "1" (step ST80).

If the average value Q 1 / average value Q2 of the crank angular velocity ω is smaller than "1" (step ST80: No), the process flow proceeds to step ST75 described above, and step ST76 or step ST77, and step ST74 is executed. Thereby, electric power assist according to the pedal force of the bicycle 10 estimated from the crank angular velocity ω or weak electric power assist is provided.

If the average value Q2 / average value Q 1 of the crank angular velocity ω is equal to or greater than "1" (step ST80: Yes), since the rotational angle sensor 130 can also be determined to assumed to be faulty, a failure is displayed by lighting a warning lamp or the like, and the electric motor 58 is stopped (step ST81) before the process flow returns to step ST30.

Thus, when all of the acceleration sensor 134, the rotational angle sensor 130, and the current sensor 136 are faulty, the electric motor 58 is stopped.

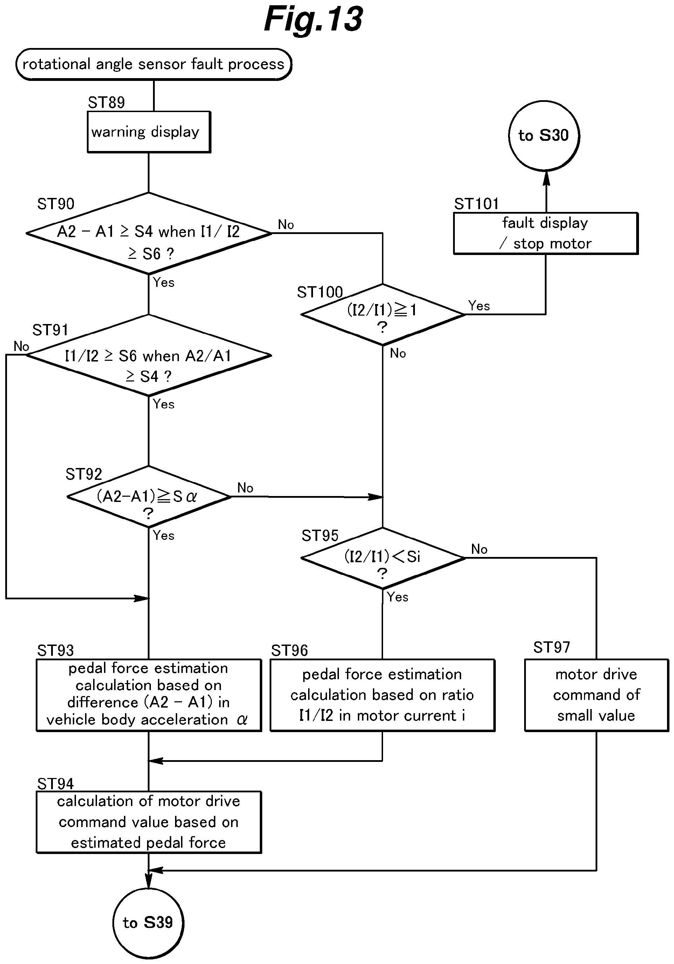

Next, the rotational angle sensor failure process routine will be described in the following with reference to FIG. 13.

First of all, a warning is displayed to the effect that the rotational angle sensor 130 is faulty (step ST89).

Next, it is determined if the average value A2 - average value A1 of the vehicle body acceleration α is equal to or greater than the fourth threshold value S4 when the average value I1 / average value I2 of the motor current value i is equal to or greater than the sixth threshold value S6 (Step ST90).

If the average value A2 - average value A1 of the vehicle body acceleration αis equal to or greater the fourth threshold value S4 when the average value I1 / average value I2 of the motor current value i is equal to or greater than the sixth threshold value S6 (step ST90: Yes), since the acceleration sensor 134 can also be assumed as being normal, it is determined if the average value I1 / average value I2 of the motor current value i is equal to the sixth threshold value S6 when the average value A2 - average value A1 of the vehicle body acceleration α is equal to or greater than the fourth threshold value S4 (Step ST91).

If the average value I1 / average value I2 of the motor current value i is equal to or greater the sixth threshold value S6 when the average value A2 - average value A1 of the vehicle body acceleration α is equal to or greater the fourth threshold value S4 (step ST91: Yes), since the current sensor 136 can also be assumed as being normal, it is determined if the average value A2 - average value A1 of the vehicle body acceleration α is equal to or greater than the threshold value Sα (step ST92).

If the average value A2 - average value A1 is equal to or greater than the threshold value Sα (step ST92: Yes), the pedal force of the bicycle 10 is estimated from the average value A2 - average value A1 of the vehicle body acceleration α (step ST93), and the motor drive command value is calculated from the estimated value of the pedal force (step ST94) before the current sensor failure process routine is concluded.

As a result, the electric motor 58 is driven according to the pedal force of the bicycle 10 estimated from the vehicle body acceleration α, and the electric power assist is provided.

If the average value A2 - average value A1 of the vehicle body acceleration α is equal to or greater than the fourth threshold value S4 when the average value I1 / average value I2 of the motor current value i is smaller than the sixth threshold value S6 (step ST91: No), since the current sensor 136 can also be assumed as being faulty, the process skips step ST92 and proceeds to step ST93.

If the average value A2 - average value A1 of the vehicle body acceleration α is smaller than the threshold value Sα (step ST92: No), it is then determined if the average value I2 / average value I1 of the motor current value i smaller than the predetermined threshold value Si (step ST95).

If the average value I2 / average value I1 of the motor current value i is smaller than the threshold value Si (step ST96: Yes), the pedal force of the bicycle 10 is estimated from the average value I1 / average value I2 of the motor current value I by calculation (step ST96), and a motor drive command value is calculated from the estimated value of the pedal force (step ST94) before the current sensor failure process routine is concluded.

As a result, the electric motor 58 is driven according to the pedal force of the bicycle 10 estimated from the motor current value i, and electric power assist is provided.

If the average value I2 / average value I1 of the motor current value i is equal to or greater than the threshold value Si (step ST96: No), the motor drive command value is set to a predetermined small fixed value (step ST97) before the current sensor failure process routine is concluded. As a result, the electric motor 58 is driven with a low torque, and a weak electric assist is provided.

If the average value A2 - average value A1 of the vehicle body acceleration α is smaller than the fourth threshold value S4 when the average value I1 / average value I2 of the motor current value i is equal to or greater than the sixth threshold value S6 (step ST90: No), since the acceleration sensor 134 can be assumed as being faulty, it is then determined if the average value I2 / average value I1 of the motor current value i is equal to or greater than "1" (step ST100).

If the average value I1 / average value I2 of the motor current value i is smaller than 1 (step ST100: No), the process flow proceeds to step ST95 described above, and step ST96 or step ST94 is executed. As a result, electric assist according to the pedal depression force of the bicycle 10 estimated from the motor current value i or weak electric assist is provided.

If the average value I1 / average value I2 of the motor current value i is 1 or greater (step ST100: Yes), since the current sensor 136 can also be assumed as being faulty, a failure is displayed by lighting a warning lamp or the like and the electric motor 58 is stopped (step ST101) before the process returns to step ST30.

Thus, when all of the acceleration sensor 134, the rotational angle sensor 130, and the current sensor 136 are faulty, the electric motor 58 is stopped.

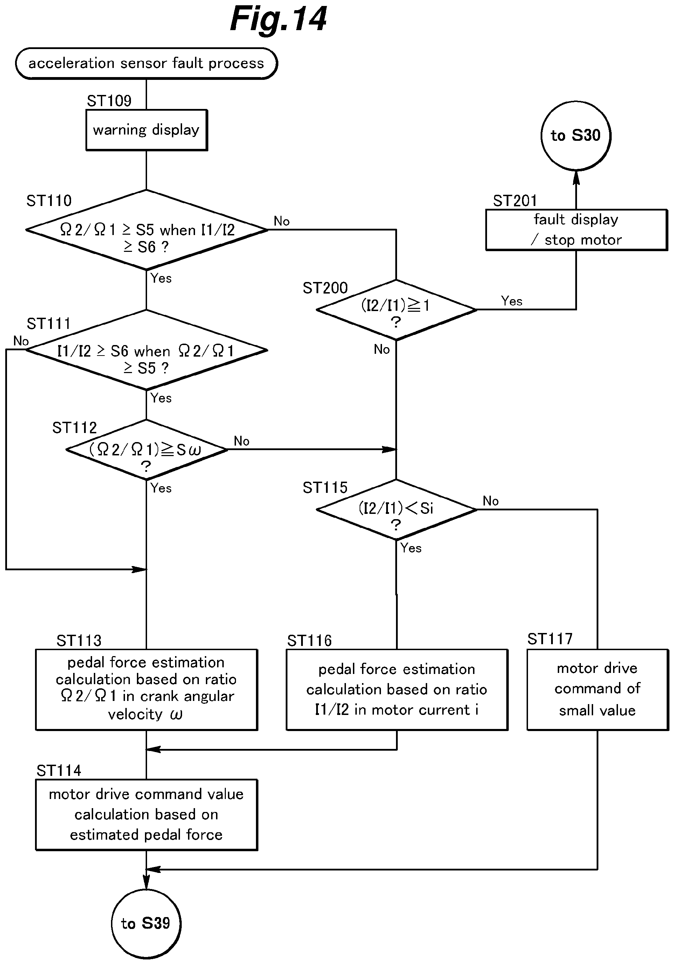

Next, the acceleration sensor failure process routine will be described in the following with reference to FIG. 14.

First, a warning is displayed to the effect that the acceleration sensor 134 is faulty (step ST109).

Next, it is determined if the average value Q2 / average value Ω1 of the crank angular velocity ω is equal to or greater than the fifth threshold value S5 when the average value I1 / average value I2 of the motor current value i is equal to or greater than the sixth threshold value S6. (Step ST110).

If the average value Q2 / average value Q 1 of the crank angular velocity ω is equal to or greater than the fifth threshold value S5 when the average value I1 / average value I2 of the motor current value i is equal to or greater than the sixth threshold value S6 (step ST110: Yes), since the rotational angle sensor 130 can be assumed as being normal, next, it is determined if the average value I1 / average value I2 of the motor current value i is equal to or greater than the sixth threshold value is S6 when the average value Q2 / average value S21 of the crank angular velocity ω is equal to or greater than the fifth threshold value S5 (step ST111).

If the average value I1 / average value I2 of the motor current value i is equal to or greater than the sixth threshold value S6 when the average value Q2 / average value Ω1 of the crank angular velocity ω is equal to or greater than the fifth threshold value S5 (step ST111: Yes), since the current sensor 136 can also be assumed as being normal, next, it is determined if the average value Q2 / average value Ω1 of the crank angular velocity ω is equal to or greater than the threshold value Sω (step ST112).

If the average value Q2 / average value Ω1 of the crank angular velocity ω is equal to or greater than the threshold value Sω (step ST112: Yes), the pedal force of the bicycle 10 is estimated from the average value Q2 / average value Ω1 of the crank angular velocity ω by calculation (step ST113), and the motor drive command value is calculated from the estimated value of the pedal force (step ST114) before the acceleration sensor failure process routine is concluded.

As a result, the electric motor 58 is driven according to the pedal force of the bicycle 10 estimated from the crank angular velocity ω, and electric power assist is provided.

If the average value Q2 / average value Ω1 of the crank angular velocity ω is smaller than the threshold value Sω (step ST112: No), it is determined if the average value I2 / average value I1 of the motor current value i is smaller than a predetermined threshold value Si (step ST115).

If the average value I2 / average value I1 of the motor current value i is smaller than the threshold value Si (step ST116: Yes), the pedal force of the bicycle 10 is estimated from the average value I1 / average value I2 of the motor current value I by calculation (step ST116), and the motor drive command value is calculated from the estimated value of the pedal force (step ST114) before the acceleration sensor failure process routine is concluded.

As a result, the electric motor 58 is driven according to the pedal depression force of the bicycle 10 estimated based on the motor current value i, and electric assist is performed.

If the average value I1 / average value I2 of the motor current value i is smaller than the sixth threshold value S6 when the average value Q2 / average value Ω1 of the crank angular velocity ω is equal to or greater than the fifth threshold value S5 (step ST111: No), since the current sensor 136 can also be assumed as being faulty, the process flow skips step ST112 and proceeds to step ST113.

If the average value I2 / average value I1 of the motor current value i is equal to or greater than a threshold value Si (step ST115: No), the motor drive command value is set to a predetermined small fixed value (step ST117), and the current sensor failure process routine is concluded. As a result, the electric motor 58 is driven with a low torque, and a weak electric power assist is provided.

If the average value Q2 / average value Q 1 of the crank angular velocity ω is smaller than the fifth threshold value S5 when the average value I1 / average value I2 of the motor current value i is equal to or greater than the sixth threshold value S6 (step ST110: No), since the rotational angle sensor 130 can also be assumed to be faulty, next, it is determined if the average value I2 / average value I1 of the motor current value i is equal to or greater than "1" (step ST120).

If the average value I1 / average value I2 of the motor current value i is smaller than "1" (step ST120: No), the process flow proceeds to step ST115 described above, and step ST76 or step ST77, and step ST74 are executed. As a result, electric assist based on the pedal force of the bicycle 10 estimated from the motor current value i or a weak electric power assist is provided.

If the average value I1 / average value I2 of the motor current value i is equal to or greater than "1" (step ST118: No), since the current sensor 136 can be assumed as being faulty, a failure is displayed by lighting a warning lamp or the like and the electric motor 58 is stopped (step ST201) before the process flow returns to step ST30.

As a result, when all of the acceleration sensor 134, the rotational angle sensor 130, and the current sensor 136 are faulty, the electric motor 58 is stopped.

Owing to these processes, the possibility of stopping the power assist operation due to a failure of the sensors is reduced, and the possibility of increasing the physical burden of pedaling on the driver in the electrically assisted bicycle can be reduced.

Although the present invention has been described above with respect to preferred embodiments thereof, the present invention is not limited to such embodiments, and can be appropriately modified without departing from the spirit of the present invention. The crank angle ranges θ1 and θ2 are not limited to the angle ranges shown in FIG. 5. For example, in the normal rotational direction, it may be selected such that the crank angle range θ1 = 330 degrees to 30 degrees, and the crank angle range θ2 = 30 to 90 degrees. The vehicle body acceleration α, crank angular velocity ω, and motor current value i that are used for failure determination may be given not only by the average values over the crank angle ranges θ1 and θ2, but may also be given as values of the crank angle θc at single points within the crank angle ranges θ1 and θ2.

In addition, not all of the components shown in the above-described embodiments are indispensable, but they can be appropriately selected and omitted without deviating from the scope of the present invention.

**LIST OF REFERENCE NUMERALS**

| | |
|---|---|
| 10: bicycle | 12: seat tube ] |
| 14: down tube | 16: chain stay |
| 18: frame structure | 20: bearing tube |
| 24: crankshaft | 24A: spline shaft portion |
| 24B: screw hole | 26: crank arm |
| 26A: spline hole | 26B: screw hole |
| 27: crank arm mounting screw | 28: crank arm |
| 30: pedal | 32: drive sprocket |
| 50: electric power assist device | 52: housing |
| 54: ring portion | 56: extension portion |
| 58: electric motor | 60: central opening |
| 62: cylindrical portion | 64: rotary output member |
| 66: boss portion | 70: coupling mechanism |
| 72: coupling main member | 73: inclined edge part |
| 74: clamp member | 75: bolt |
| 76: bolt | 78: screw member |
| 80: bolt | 81: through hole |
| 90: support mechanism | 92: mounting member |
| 94: fastening band | 96: rectangular frame part |
| 98: support base member | 100: rectangular plate-shaped part |
| 102: depending piece | 103: through hole |
| 104: support member | 106: fixed bush |
| 108: female screw | 109: male screw |
| 110: movable bush | 112: flange part |
| 114: fastening bolt | 120: battery |
| 130: rotational angle sensor (rotational angle detection device) | |
| 132: pulse sensor | |
| 134: acceleration sensor (acceleration detection device) | |
| 136: current sensor (current detection device) | |
| 138: inclination angle sensor | 140: voltage sensor |
| 150: control unit | |
| 152: first pedal force estimation calculation unit | |
| 154: second pedal force estimation calculation unit | |
| 156: third pedal force estimation calculation unit | |
| 158: failure diagnosis unit | |
| 160: crank rotational direction determination unit | |
| 162: pedal force presence / absence determination unit | |
| 164: motor drive control unit | 166: failure display |
| 170: motor drive circuit | |

## Claims

1. An electric power assist device configured to be fitted to a bicycle, comprising;
an electric motor connected to a crankshaft configured to be driven by a pedal force applied to a pedal of the bicycle via a crank arm or to the crank arm in a torque transmission relationship;
a first, a second and a third state quantity detecting unit configured to individually detect a first, a second and a third state quantity which are mutually distinct for estimating the pedal force of the bicycle; and
a control unit configured to control an operation of the electric motor based on outputs of the first, the second and the third state quantity detecting units,
wherein the control unit includes:
a first pedal force estimating computation unit configured to estimate the pedal force of the bicycle according to a variance between values of the first state quantity at two mutually different crank angle positions;
a second pedal force estimating computation unit configured to estimate the pedal force of the bicycle according to a variance between values of the second state quantity at two mutually different crank angle positions;
a third pedal force estimating computation unit configured to estimate the pedal force of the bicycle according to a variance between values of the third state quantity at two mutually different crank angle positions;
a motor drive control unit configured to control a drive of the electric motor according to a selected one of the pedal forces estimated by the first, the second and the third state quantity detecting units; and
a failure diagnosis unit configured to diagnose failures of the first, the second and the third state quantity detecting units by evaluating the variances in the values of first, the second and the third state quantities.

2. The electric power assist device according to claim 1, wherein the motor drive control unit is configured to control the drive of the electric motor according to the pedal force estimated by one of the first pedal force estimating computation unit, the second pedal force estimating computation unit, and the third pedal force estimating computation unit corresponding to one of the first to the third state quantity detecting units that is diagnosed to be not faulty by the failure diagnosis unit.

3. The electric power assist device according to claim 1 or 2, wherein one of the two mutually different crank angle positions includes a top dead center of the pedal, and another of the two mutually different crank angle positions includes a crank angle position 90 degrees sway from the top dead center of the pedal.

4. The electric power assist device according to claim 1 or 2, wherein the first pedal force estimation calculation unit is configured to estimate the pedal force according to a variance between average values of the first state quantity averaged over two rotational angle ranges containing the two mutually different crank angle positions, respectively, the second pedal force estimation calculation unit is configured to estimate the pedal force according to a variance between average values of the second state quantity averaged over two rotational angle ranges containing the two mutually different crank angle positions, respectively, and the third pedal force estimation calculation unit is configured to estimate the pedal force according to a variance between average values of the third state quantity averaged over two rotational angle ranges containing the two mutually different crank angle positions, respectively.

5. The electric power assist device according to claim 1 or 2, wherein the first to third state quantity detecting units are selected from an acceleration sensor for detecting a fore and aft acceleration of the bicycle, a rotational angle sensor for detecting a crank angle and a crank angular velocity of the crankshaft, and a current sensor for detecting a motor current value of the electric motor.

6. The electric power assist device according to claim 1 or 2, wherein the failure diagnosis unit is configured to determine the failures of the first to third state quantity detecting units by comparing the variances between the values of the first to third state quantities with corresponding first to third threshold values, respectively.

7. The electric power assist device according to claim 6, wherein the failure diagnosis unit is configured to diagnose the first state quantity detecting unit to be normal when the variance in regard to the first state quantity is in a prescribed magnitude relationship to the first threshold value, and the first state quantity detecting unit to be faulty when the variance in regard to the first state quantity is not in the prescribed magnitude relationship to the first threshold value;
the failure diagnosis unit is configured to diagnose the second state quantity detecting unit to be normal when the variance in regard to the second state quantity is in a prescribed magnitude relationship to the second threshold value, and the second state quantity detecting unit to be faulty when the variance in regard to the second state quantity is not in the prescribed magnitude relationship to the second threshold value; and
the failure diagnosis unit is configured to diagnose the third state quantity detecting unit to be normal when the variance in regard to the third state quantity is in a prescribed magnitude relationship to the third threshold value, and the third state quantity detecting unit to be faulty when the variance in regard to the third state quantity is not in the prescribed magnitude relationship to the third threshold value.

8. The electric power assist device according to claim 6, wherein the motor drive control unit is configured to control the drive of the electric motor according to the pedal force estimated by the first pedal force estimating computation unit when the first pedal force estimating computation unit is determined to be normal by the failure diagnosis unit;
to control the drive of the electric motor according to the pedal force estimated by the second pedal force estimating computation unit instead of the first pedal force estimating computation unit when the first pedal force estimating computation unit is determined to be faulty by the failure diagnosis unit;
to control the drive of the electric motor according to the pedal force estimated by the third pedal force estimating computation unit instead of the second pedal force estimating computation unit when the second pedal force estimating computation unit is determined to be faulty by the failure diagnosis unit; and
to terminate the drive of the electric motor when the third pedal force estimating computation unit is determined to be faulty by the failure diagnosis unit.

9. The electric power assist device according to claim 1 or 2, wherein the failure diagnosis unit is configured to determine the failures of the first to third state quantity detecting units by comparing the variances in regards to the first to third state quantities with one another.

10. The electric power assist device according to claim 1 or 2, wherein the first state quantity detecting unit includes an acceleration sensor for measuring a fore and aft acceleration of the bicycle, the second state quantity detecting unit includes a rotational angle sensor for detecting a crank angle and a crank angular velocity of the crankshaft, and the third state quantity detecting unit includes a current sensor for detecting a motor current value of the electric motor.

11. The electric power assist device according to claim 1 or 2, wherein the failure diagnosis unit is configured
to diagnose all of the acceleration sensor, the rotational angle sensor, and the current sensor to be normal in case where the variance in the vehicle body acceleration between the two mutually different crankshaft angles is equal to or greater than a fourth threshold value when the variance in the crankshaft angular velocity between the two mutually different crankshaft angles is equal to or greater than a fifth threshold value, if the variance in the crank angular velocity between the two mutually different crankshaft angles is equal to or greater than a fifth threshold value when the variance in the motor current between the two mutually different crankshaft angles is equal to or greater than a sixth threshold value;
to diagnose that the acceleration sensor to be faulty in case where the variance in the vehicle body acceleration between the two mutually different crankshaft angles is smaller than the fourth threshold value when the variance in the crankshaft angular velocity between the two mutually different crankshaft angles is equal to or greater than the fifth threshold value if the variance in the vehicle body acceleration between the two mutually different crankshaft angles is equal to or greater than the fourth threshold value when the variance in the motor current between the two mutually different crankshaft angles is smaller than the sixth threshold value;
to diagnose that the rotational angle sensor to be faulty in case where the variance in the vehicle body acceleration between the two mutually different crankshaft angles is smaller than the fourth threshold value when the variance in the crankshaft angular velocity between the two mutually different crankshaft angles is equal to or greater than the fifth threshold value if the variance in the vehicle body acceleration between the two mutually different crankshaft angles is smaller than the fourth threshold value when the variance in the motor current between the two mutually different crankshaft angles is equal to or greater than the sixth threshold value; and
to diagnose that the motor current sensor to be faulty in case where the variance in the vehicle body acceleration between the two mutually different crankshaft angles is equal to or greater than the fourth threshold value when the variance in the crankshaft angular velocity between the two mutually different crankshaft angles is equal to or greater than the fifth threshold value if the variance in the crankshaft angular velocity between the two mutually different crankshaft angles is smaller than the fifth threshold value when the variance in the motor current between the two mutually different crankshaft angles is equal to or greater than the sixth threshold value.

12. The electric power assist device according to claim 11, wherein the failure diagnosis unit diagnoses that the current sensor is also faulty in case where the acceleration sensor is diagnosed to be faulty, and the variance in the crank angular velocity is equal to or greater than the fifth threshold value when the variance in the motor current value is equal to or greater than the sixth threshold value if the variance in the motor current value is smaller than the sixth threshold value when the variance in the crank angular velocity is equal to or greater than the fifth threshold value;
that the rotational angle sensor is also faulty if the acceleration sensor is diagnosed to be faulty, and the variance in the crank angular velocity is smaller than the fifth threshold value when the variance in the motor current value is equal to or greater than the sixth threshold value;
that the current sensor is also faulty in case where the rotational angle sensor is diagnosed to be faulty, and the variance in the vehicle body acceleration is equal to or greater than the fourth threshold value when the variance in the motor current values is equal to or greater than the sixth threshold value if the variance of the motor current value is smaller than the sixth threshold value when the variance in the vehicle body acceleration is equal to or greater than the fourth threshold value;
that the acceleration sensor is faulty if the rotational angle sensor is diagnosed to be faulty, and the variance in the vehicle body acceleration is smaller than the fourth threshold value when the variance in the motor current value is equal to or greater than the sixth threshold value;
that the rotational angle sensor is also faulty in case where the current sensor is diagnosed to be faulty, and the vehicle body acceleration is equal to or greater than the fourth threshold value when the variance in the crank angular velocity is equal to or greater than the fifth threshold value if the crank angular velocity is smaller than the fifth threshold value when the variance in the vehicle body acceleration is equal to or greater than the fourth threshold value; and
that the acceleration sensor is also faulty if the current sensor is diagnosed to be faulty, and the vehicle body acceleration is smaller than the fourth threshold value when the crank angular velocity is equal to or greater than the fifth threshold value.

13. A bicycle fitted with the electric power assist device according to any one of claims 1 to 12.
